# EUROPÄISCHE PATENTSCHRIFT

(11) **EP 3 835 599 B1**
(45) Veröffentlichungstag und Bekanntmachung des Hinweises auf die Patenterteilung: **03.12.2025**
(21) Anmeldenummer: 19215803.8
(22) Anmeldetag: 12.12.2019
(51) Int. Cl.: F16K 47/00

(54) **DÄMPFUNGSSYSTEM FÜR HYDRAULISCHE SYSTEME**
DAMPING SYSTEM FOR HYDRAULIC SYSTEMS
SYSTÈME D'AMORTISSEMENT POUR SYSTÈMES HYDRAULIQUES

(43) Veröffentlichungstag der Anmeldung: 16.06.2021
(73) Patentinhaber: XCMG European Research Center GmbH, 47807 Krefeld (DE)
(72) Erfinder: Valiante, Aniello, 47799 Krefeld (DE); Siebert, Christoph, 47804 Krefeld (DE)
(74) Vertreter: Dr. Stark & Partner Patentanwälte mbB

(56) Entgegenhaltungen:
- EP-A1- 2 103 835
- CN-A- 104 613 036
- DE-A1- 102008 060 650
- DE-A1- 102015 215 830
- GB-A- 1 206 869
- JP-A- 2000 233 746
- US-A- 5 366 202
- US-A1- 2015 276 088
- US-B1- 6 295 811

## Beschreibung

Die Erfindung betrifft ein Dämpfungssystem für hydraulische Systeme mit einem zu bedämpfenden Hydraulikventil, welches zumindest einen als Steueranschluss ausgebildeten ersten Anschluss, einen als Anschluss für die Hochdruckseite ausgebildeten zweiten Anschluss und einen als Anschluss für die Niederdruckseite ausgebildeten dritten Anschluss sowie einen Ventilschieber aufweist, und mit einer Dämpfungskammer mit zumindest einer Seite und einem verlagerbaren Kolben, wobei die zumindest eine Seite ein Volumen aufweist, auf das der Kolben wirkt, und wobei der Ventilschieber des Hydraulikventils über eine mechanische Verbindung derart mit dem Kolben der Dämpfungskammer verbunden ist, dass durch eine Verlagerung des Ventilschiebers auch eine Verlagerung des Kolbens resultiert.

Die Bedämpfung ist insoweit wünschenswert, um bei kleineren Schwingen einem "Aufschaukeln" entgegenzuwirken. Allerdings soll bei einer schnellen starken Änderung keine Bedämpfung erfolgen, weil eine solche Änderung in der Regel gewollt ist und absichtlich erfolgt. Mit dem Einsatz der Dämpfungskammer wird Schwingungen/Störungen der an einem der drei Anschlüsse, beispielsweise am dritten Anschluss, ankommenden Kraft entgegengewirkt.

Aus der US 2015/0276088 A1 ist ein Druckregelventil bekannt, umfassend ein Gehäuse mit einem Hohlraum, in dem mindestens ein erster Anschluss, ein zweiter Anschluss und ein dritter Anschluss in Fluidverbindung mit dem Hohlraum stehen, sowie einen in dem Hohlraum beweglichen Schieber.

Die CN 104613036 A offenbart ein geräuschreduzierendes Überströmventil mit hydrodynamischem Kraftausgleich und einstellbaren Dämpfungsfunktionen.

Aus der DE 10 2015 215 830 A1 ist eine Ventileinrichtung umfassend ein Ventilelement und eine Druckschwingungs-Dämpfungseinrichtung zum Dämpfen von Druckschwingungen in einem Fluidbereich bekannt.

Die EP 2 103 835 A1 offenbart ein Dämpfungsventil, das in einem Stoßdämpfer vorgesehen ist, um eine Dämpfungskraft zu erzeugen, indem es einem von einem Zylinder zu einem Reservoir abgegebenen Flüssigkeitsstrom entsprechend der Kontraktion/Dehnung des Stoßdämpfers einen Widerstand entgegensetzt.

Aufgabe der Erfindung ist es, die vorgenannten Nachteile zu vermeiden und ein Dämpfungssystem anzugeben, mit dem eine bedarfsgerecht flexible Bedämpfung des Hydrauliksystems möglich ist.

Diese Aufgabe wird bei einem gattungsgemäßen Dämpfungssystem dadurch gelöst, dass eine Dämpfungsmanipulationsvorrichtung vorgesehen ist, die das Volumen der einen Seite der Dämpfungskammer mit einem anderen Volumen verbindet, wobei während des Betriebs des hydraulischen Systems mittels der Dämpfungsmanipulationsvorrichtung das resultierende Verhalten der Dämpfungskammer in Bezug auf die Reaktionszeit des Hydraulikventils sowie die Dämpfungseigenschaften des Hydraulikventils gezielt veränderbar ist. Hierdurch kann eine unabhängig vom Betriebszustand gesteuerte Bedämpfung des hydraulischen Systems realisiert werden. Insoweit kann mittels der Dämpfungsmanipulationsvorrichtung das Verhalten der Dämpfungskammer aktiv gesteuert werden. Durch die Dämpfungsmanipulationsvorrichtung sind die Reaktionszeit sowie die Dämpfungseigenschaften regelbar, um somit Störungen von außen entgegenzuwirken.

Dabei umfasst die Dämpfungsmanipulationsvorrichtung ein hydraulisches Ventil, das druckgesteuert oder druckdifferenzgesteuert ist. Dabei ist das hydraulische Ventil als hydraulisches Druckbegrenzungsventil ausgebildet.

Erfindungsgemäß kann die Dämpfungskammer eine zweite Seite aufweisen, und dabei kann vorzugsweise diese zweite Seite der Dämpfungskammer ein Volumen aufweisen. Dann hat die Dämpfungskammer zum einen ein stangenseitiges Volumen und zum anderen ein gegenüberliegendes Volumen. Erfindungsgemäß können diese beiden Volumen über ein Rückschlagventil miteinander verbunden sein.

Erfindungsgemäß kann ein hydraulischer Widerstand vorgesehen sein, der das Volumen von einer Seite der Dämpfungskammer mit einem anderen Volumen verbindet. Durch die Größe des hydraulischen Widerstandes wird das Dämpfungsverhalten für den dynamischen Einsatz des Ventils bestimmt, wobei der hydraulische Widerstand auch die Ansprechzeit des Ventils beeinflusst.

Vorzugsweise kann die Dämpfungsmanipulationsvorrichtung parallel zu dem hydraulischen Widerstand vorgesehen sein.

Erfindungsgemäß kann sowohl der hydraulische Widerstand als auch die Dämpfungsmanipulationsvorrichtung das Volumen der einen Seite der Dämpfungskammer mit einem übereinstimmenden anderen Volumen verbinden. Hierdurch wird der bauliche Aufwand gegenüber Verbindungen mit verschiedenen Volumen deutlich reduziert.

Bei unterschiedlichen Volumen kann das Volumen, mit dem der hydraulische Widerstand die eine Seite der Dämpfungskammer verbindet, unterschiedlich groß sein gegenüber dem Volumen, mit dem die Dämpfungsmanipulationsvorrichtung das Volumen der einen Seite der Dämpfungskammer verbindet.

Dabei können das Volumen, mit dem der hydraulische Widerstand die eine Seite der Dämpfungskammer verbindet, sowie das Volumen, mit dem die Dämpfungsmanipulationsvorrichtung das Volumen der einen Seite der Dämpfungskammer verbindet, durch den hydraulischen Widerstand und die Dämpfungseinrichtung miteinander verbunden sein.

Bevorzugt kann das Hydraulikventil ein Proportionalventil sein. Alternativ kann das Hydraulikventil aber auch ein nicht-proportionales Hydraulikventil sein.

Bei einem bevorzugten Ausführungsbeispiel der Erfindung kann die Dämpfungsmanipulationsvorrichtung einen aktiv steuerbaren zusätzlichen hydraulischen Widerstand, vorzugsweise in Form eines aktiv steuerbaren zusätzlichen Hydraulikventils, umfassen.

Dabei kann für den zusätzlichen hydraulischen Widerstand eine hydraulische Betätigungseinrichtung und/oder eine elektrische Betätigungseinrichtung vorgesehen sein.

Vorzugsweise kann die Betätigungseinrichtung des aktiv steuerbaren zusätzlichen hydraulischen Widerstands derart mit dem ersten Anschluss oder dem zweiten Anschluss oder dem dritten Anschluss des Hydraulikventils gekoppelt sein, dass sie über den Druck am ersten Anschluss oder den Druck am zweiten Anschluss oder den Druck am dritten Anschluss des Hydraulikventils betätigt ist.

Vorteilhafterweise kann parallel zu dem hydraulischen Widerstand ein Rückschlagventil vorgesehen sein, dessen Durchlassrichtung zu dem Volumen der zumindest einen Seite der Dämpfungskammer führt.

Erfindungsgemäß kann der hydraulische Widerstand mit einem Anschluss des Hydraulikventils, vorzugsweise mit dem als Steueranschluss ausgebildeten ersten Anschluss oder dem als Anschluss für die Hochdruckseite ausgebildeten zweiten Anschluss oder dem als Anschluss für die Niederdruckseite ausgebildeten dritten Anschluss des Hydraulikventils, verbunden sein. Er kann aber auch mit einem anderen Anschluss des Hydraulikventils verbunden sein.

Vorzugsweise kann die Dämpfungsmanipulationsvorrichtung mit dem als Anschluss für die Hochdruckseite ausgebildeten zweiten Anschluss oder dem als Anschluss für die Niederdruckseite ausgebildeten dritten Anschluss des Hydraulikventils verbunden sein.

Die Erfindung betrifft weiterhin ein hydraulisches System mit zumindest einem zu bedämpfenden Hydraulikventil, wobei jedes zu bedämpfende Hydraulikventil zumindest einen als Steueranschluss ausgebildeten ersten Anschluss, einen als Anschluss für die Hochdruckseite ausgebildeten zweiten Anschluss und einen als Anschluss für die Niederdruckseite ausgebildeten dritten Anschluss sowie einen Ventilschieber aufweist.

Für eine bedarfsgerecht flexible Bedämpfung des Hydrauliksystems aus den eingangs ausgeführten Gründen ist zumindest ein erfindungsgemäßes Dämpfungssystem vorgesehen, welches einem zu bedämpfenden Hydraulikventil zugeordnet ist.

Vorteilhafterweise können bei wenigstens einem zu bedämpfenden Hydraulikventil zumindest zwei, vorzugsweise jeweils nur in eine Richtung dämpfende, erfindungsgemäße Dämpfungssysteme derart vorgesehen sein, dass die beiden Dämpfungssysteme zumindest in entgegengesetzter Richtung dämpfend wirkend angeordnet sind.

Erfindungsgemäß kann zum einen zumindest eines der zumindest zwei Dämpfungssysteme, die wenigstens in entgegengesetzter Richtung dämpfend wirkend sind, auf der einen Seite des zu bedämpfenden Hydraulikventils vorgesehen sein und zum anderen kann zumindest ein anderes der zumindest zwei Dämpfungssysteme, die wenigstens in entgegengesetzter Richtung dämpfend wirkend sind, auf der anderen Seite des zu bedämpfenden Hydraulikventils vorgesehen sein.

Dabei können das auf der einen Seite des zu bedämpfenden Hydraulikventils vorgesehene Dämpfungssystem einerseits und das auf der anderen Seite des zu bedämpfenden Hydraulikventils vorgesehene Dämpfungssystem andererseits unterschiedlich ausgebildet sein und/oder unterschiedliche Dämpfungseigenschaften haben.

Außerdem kann bei wenigstens einem zu bedämpfenden Hydraulikventil nur ein einziges Dämpfungssystem vorgesehen und als ein in beide Richtungen dämpfendes Dämpfungssystem ausgebildet sein.

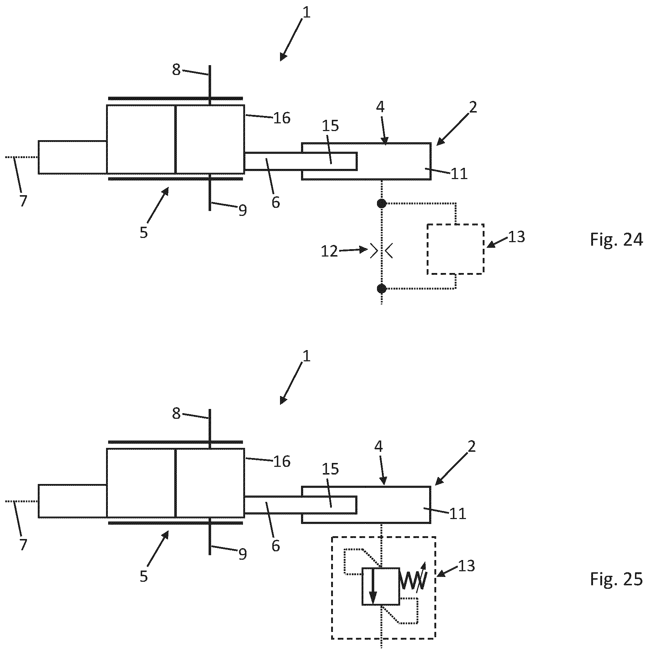

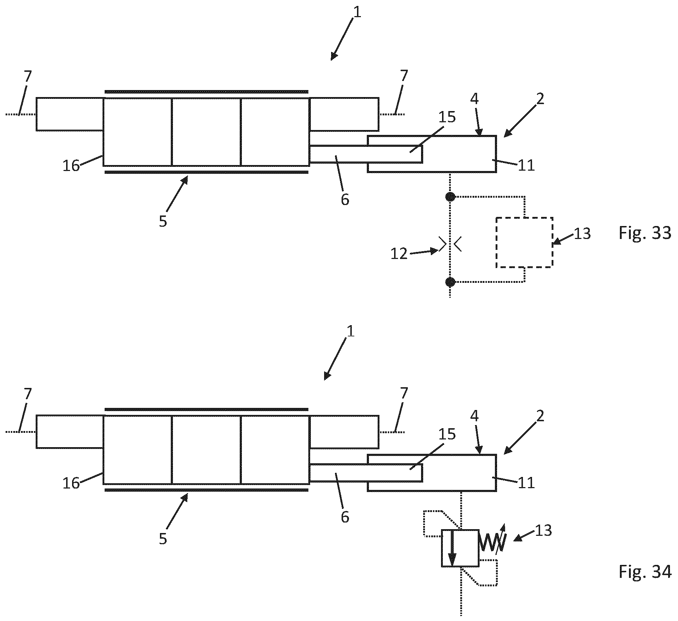

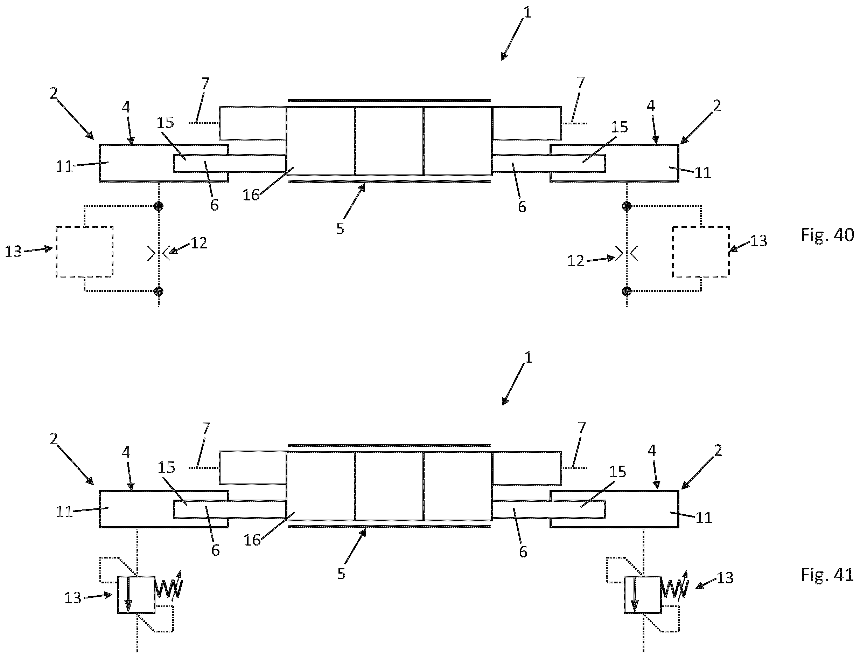

Im Folgenden werden in den Zeichnungen dargestellte Ausführungsbeispiele der Erfindung erläutert. Die Figuren 25, 34, 41, 90 und 92 zeigen verschiedene Ausführungsbeispiele eines erfindungsgemäßen Dämpfungssystems. In allen Figuren werden für gleiche bzw. gleichartige Bauteile übereinstimmende Bezugszeichen verwendet.

In den Figuren ist jeweils ein Dämpfungssystem 1 für ein in der Zeichnung nicht näher dargestelltes hydraulisches System mit wenigstens einem zu bedämpfenden Hydraulikventil 5 gezeigt. Hierzu umfasst das Dämpfungssystem 1 zumindest eine Dämpfungskammer 2 mit einem Kolben 15 sowie zumindest einem Volumen 11, wobei das Hydraulikventil 5 mit der Dämpfungskammer 2 über eine mechanische Verbindung 6 verbunden ist.

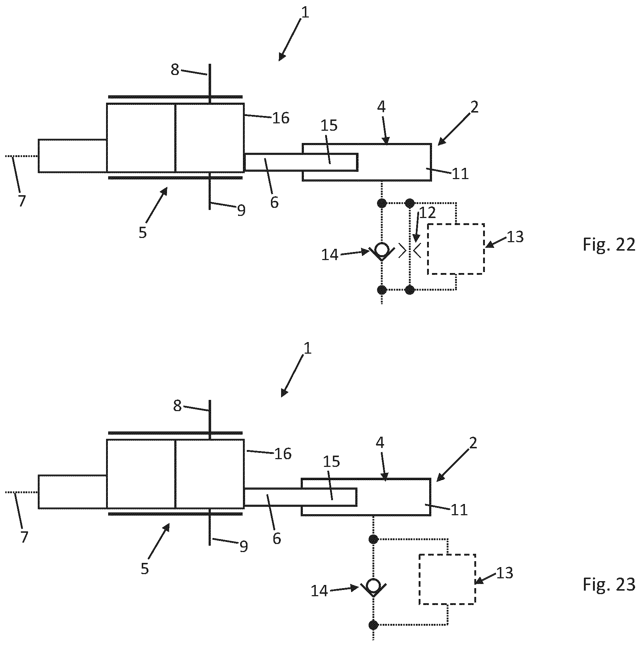

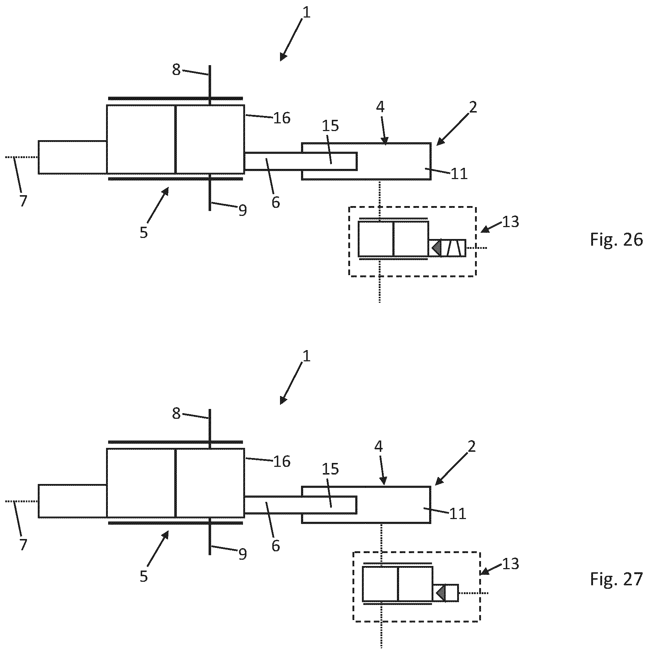

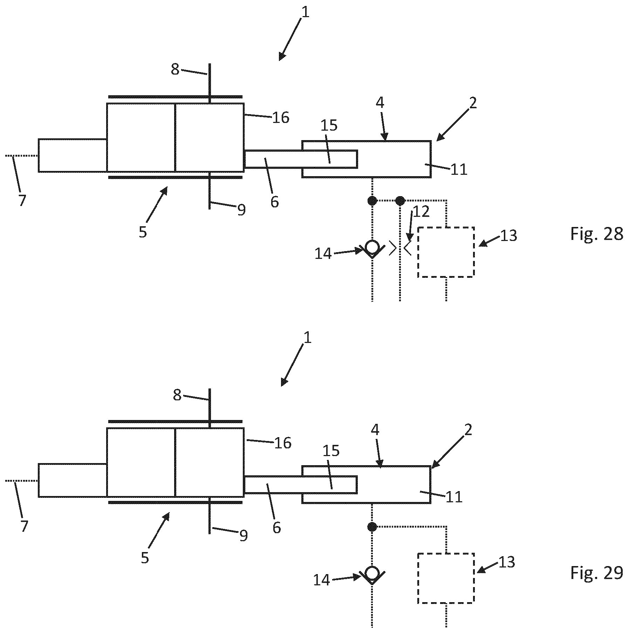

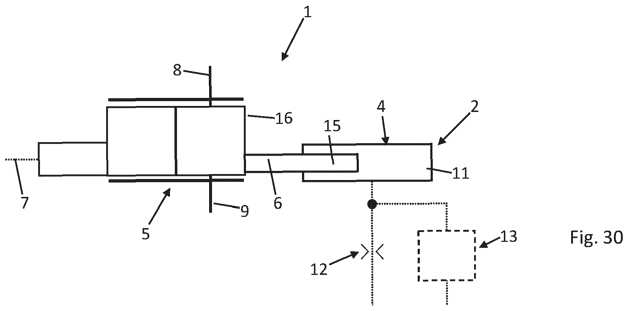

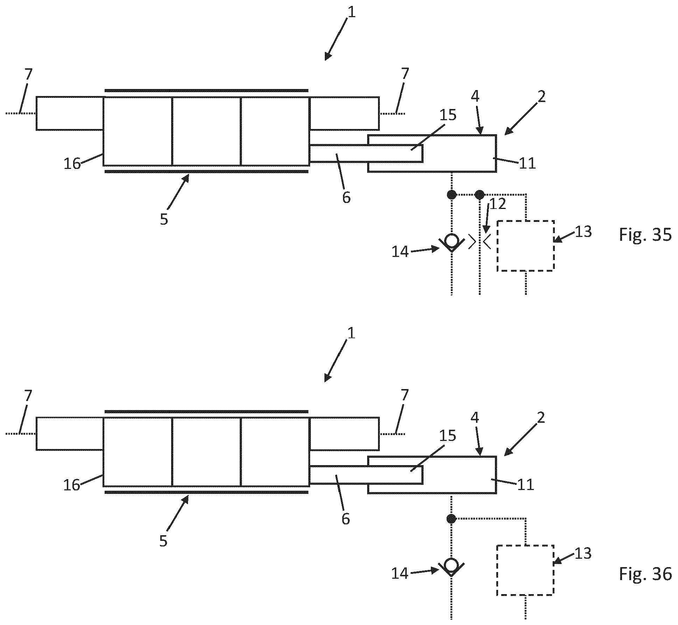

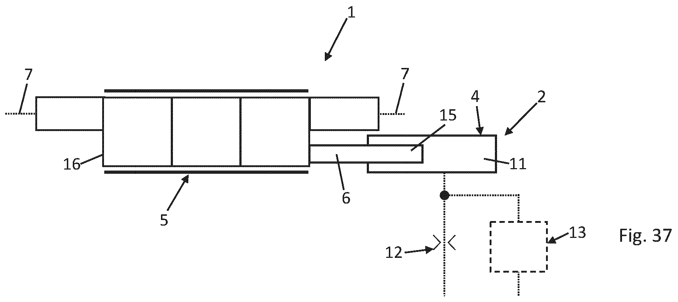

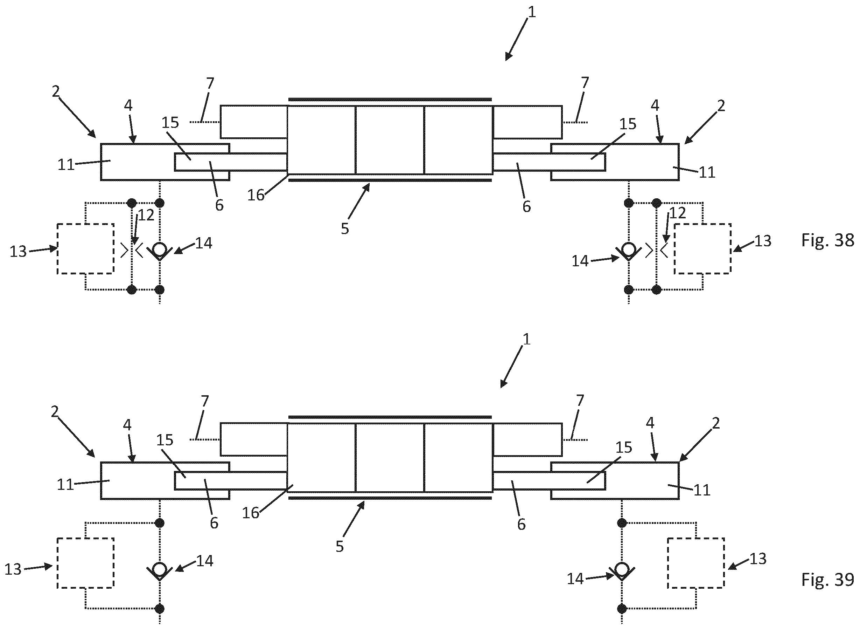

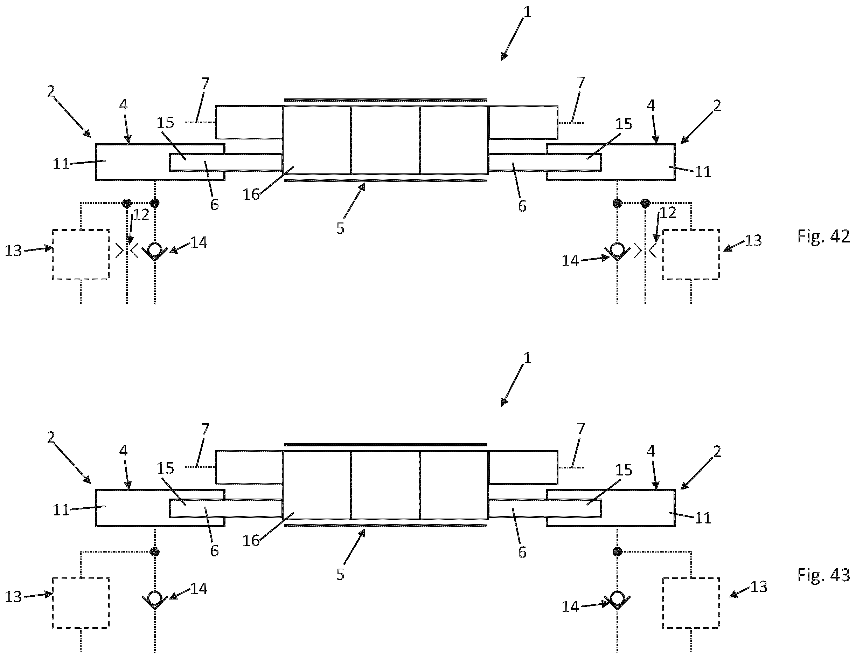

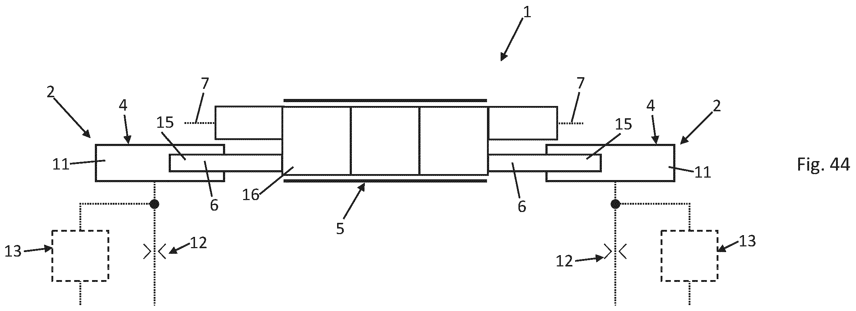

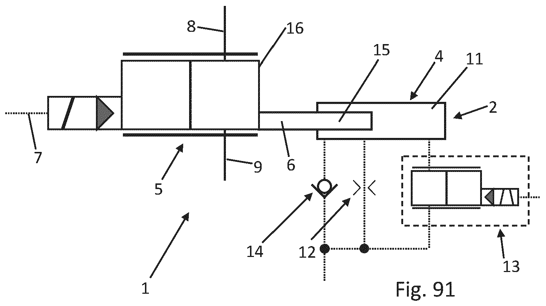

In den meisten Figuren ist diese mechanische Verbindung 6 als separates Bauteil ausgebildet, wohingegen die mechanische Verbindung 6 in den Fig. 22 bis 44 und 91 bis 94 jeweils durch einen Teilbereich des Kolbens 15 der Dämpfungskammer 2 gebildet ist, wobei dann die Dämpfungskammer 2 lediglich ein Volumen 11 aufweist, in welches die mechanische Verbindung 6 je nach Stellung des Hydraulikventils 5 mehr oder weniger stark eingedrungen ist und damit das Volumen 11 mehr oder weniger stark reduziert.

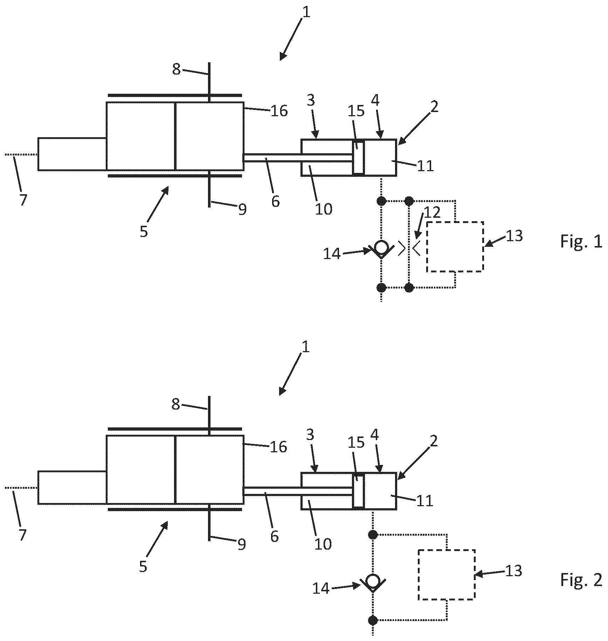

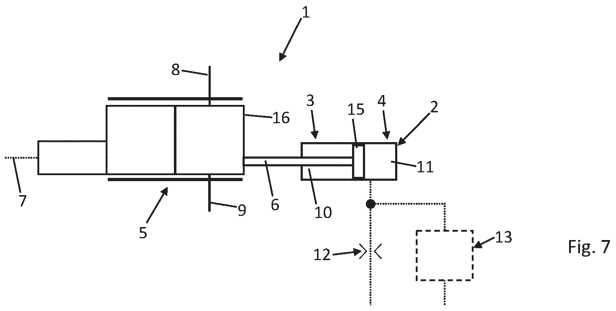

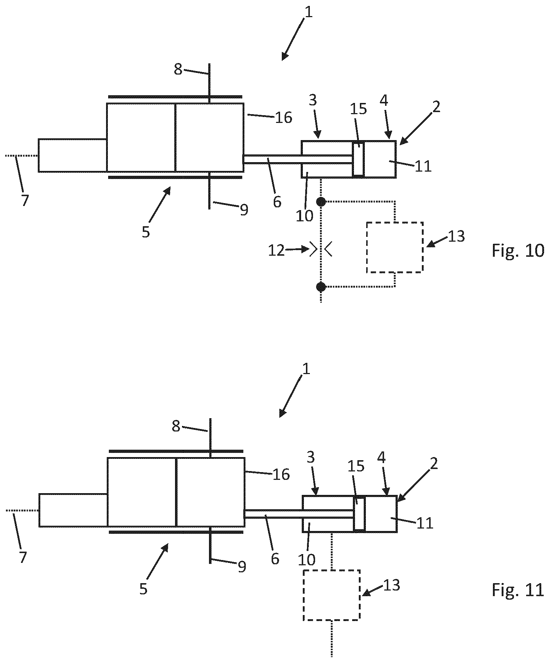

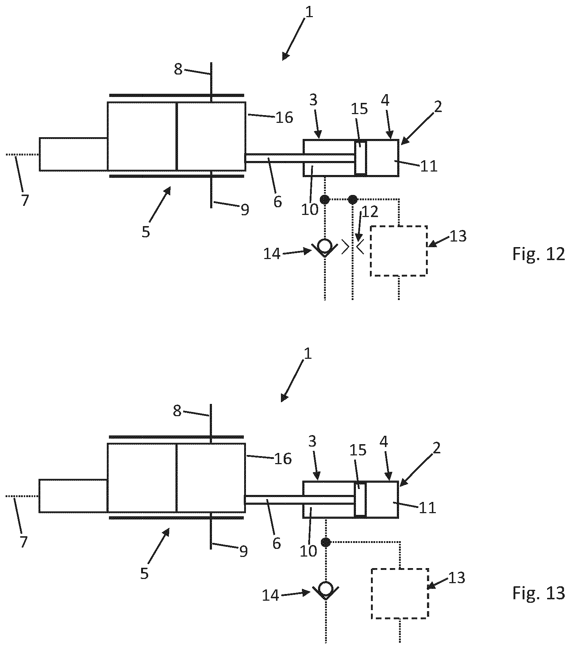

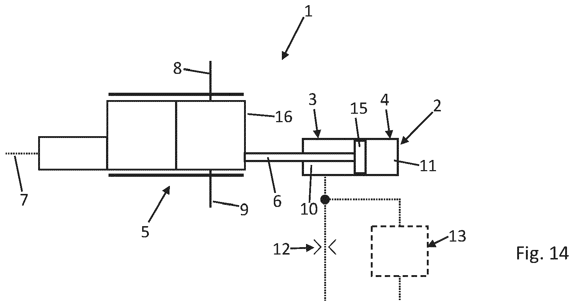

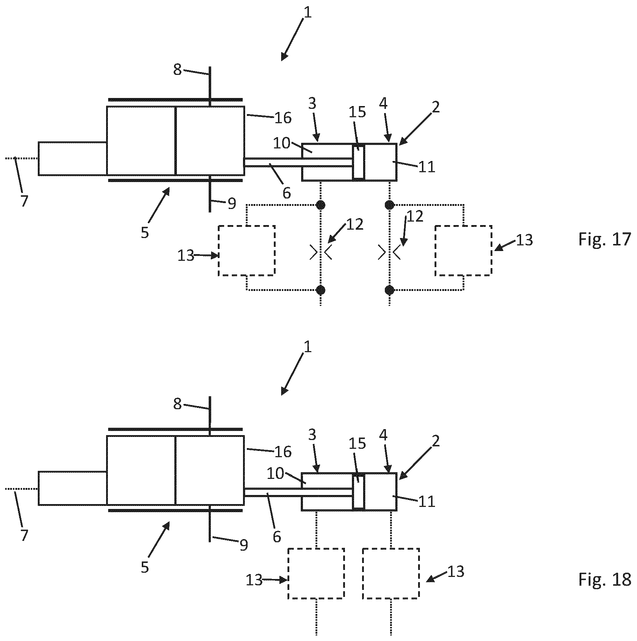

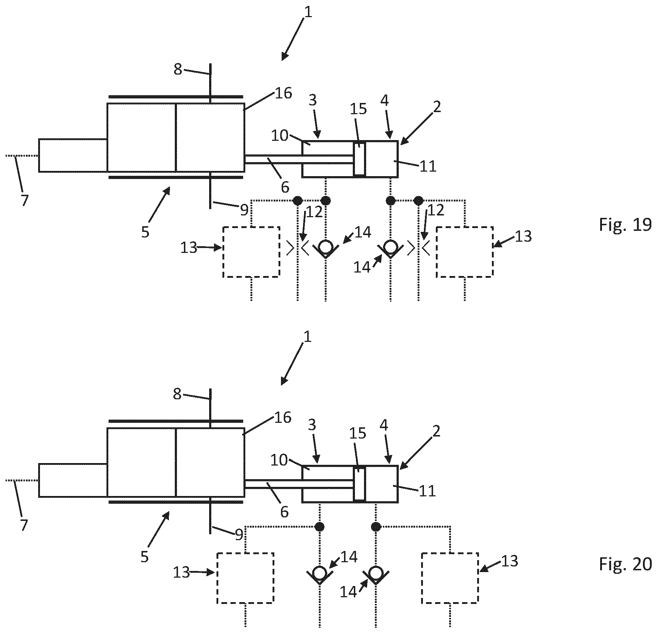

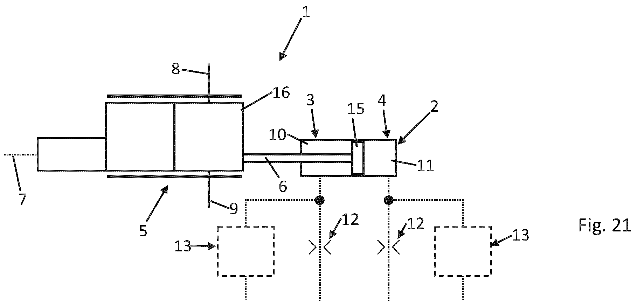

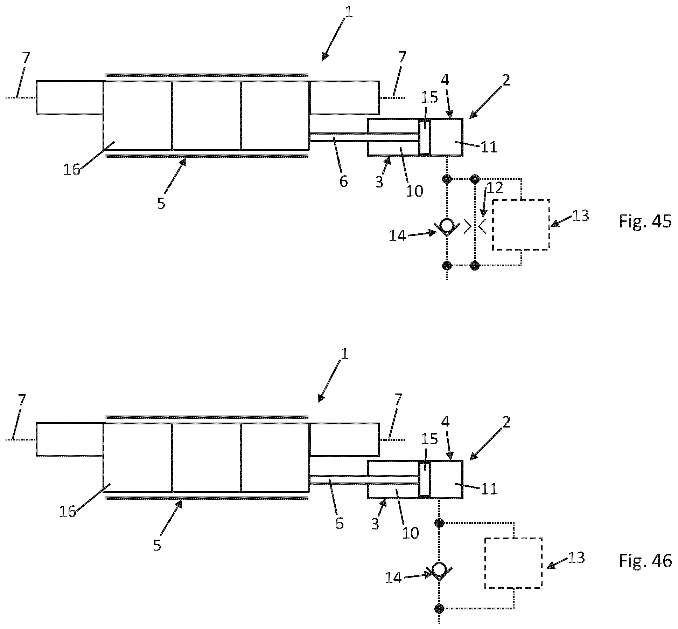

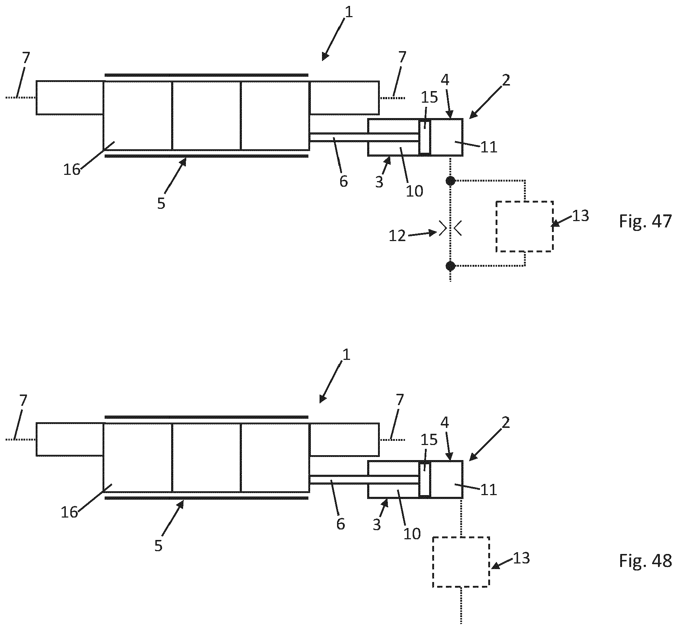

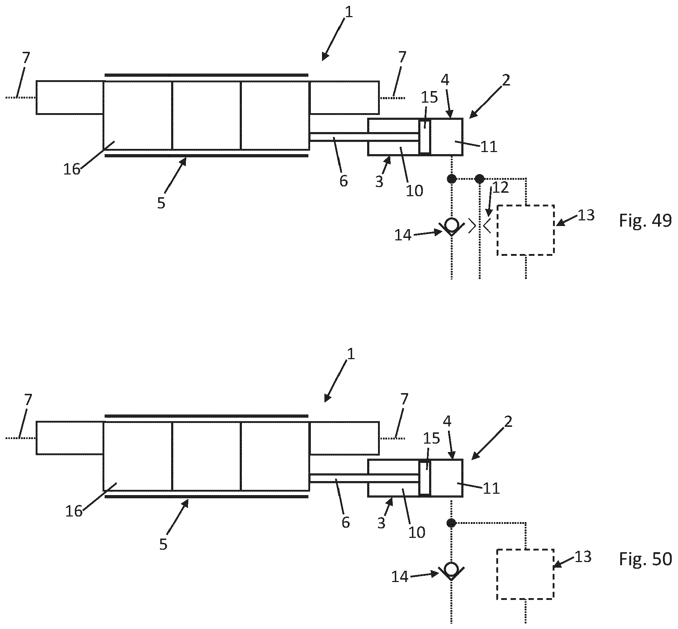

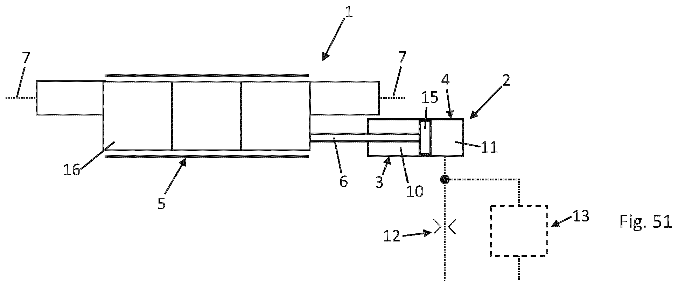

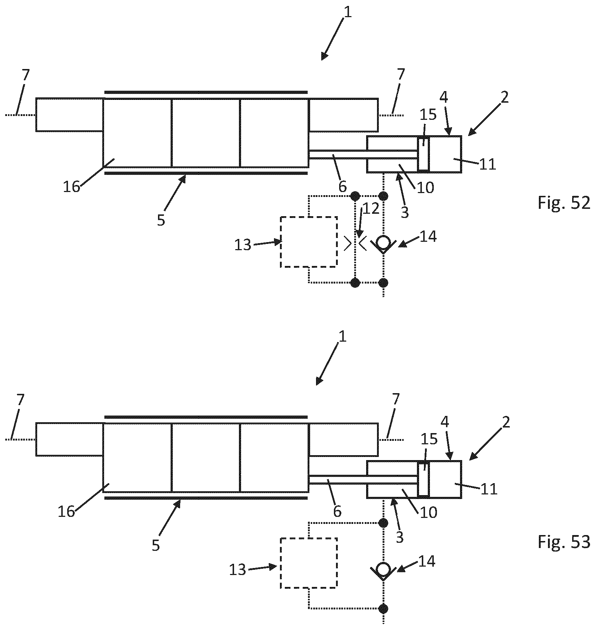

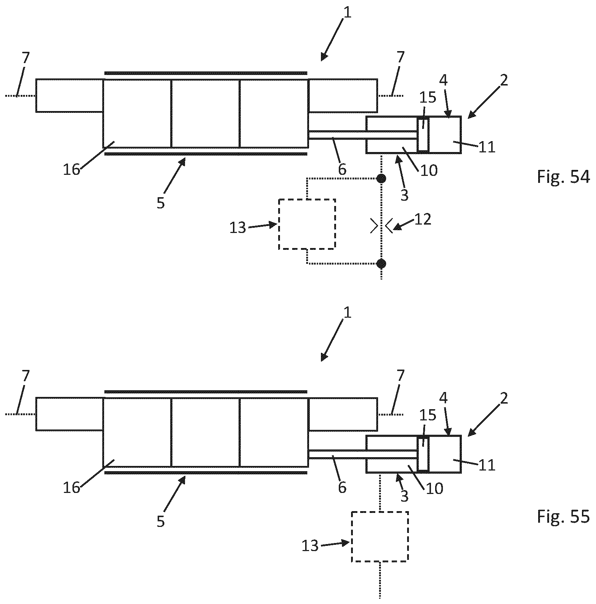

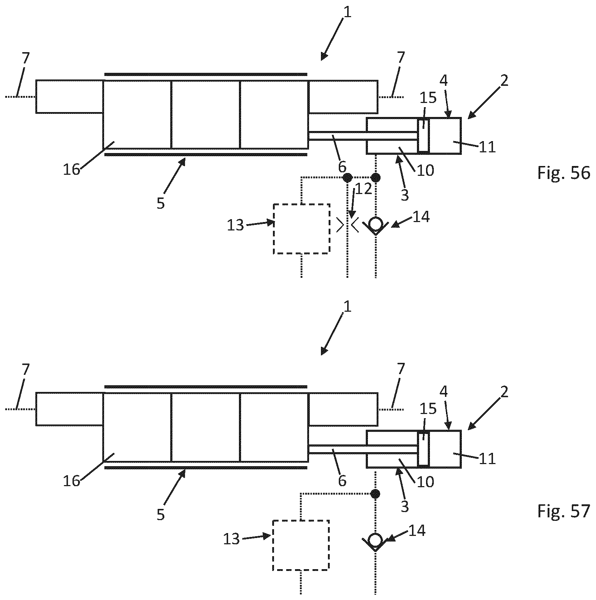

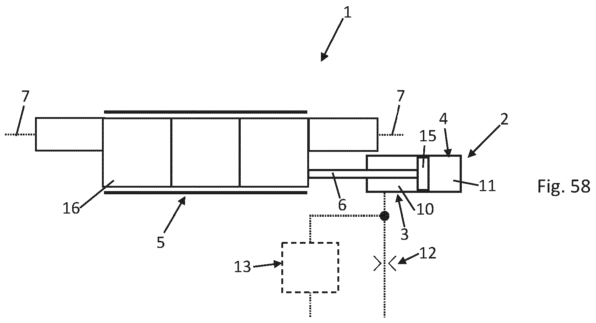

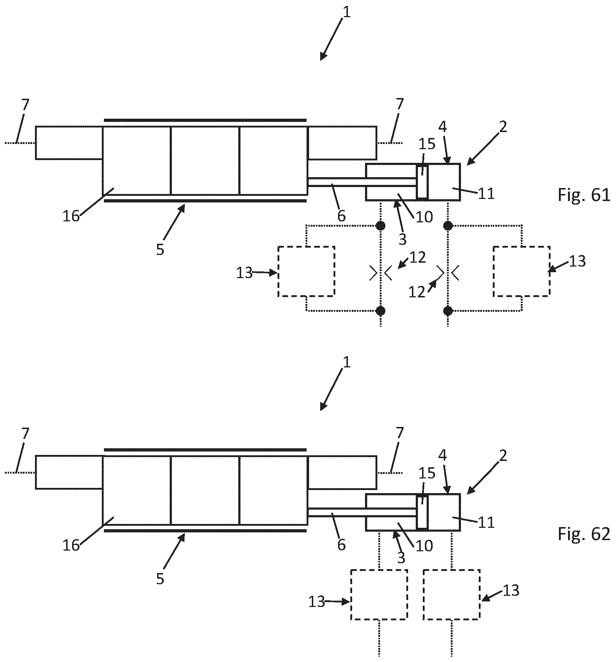

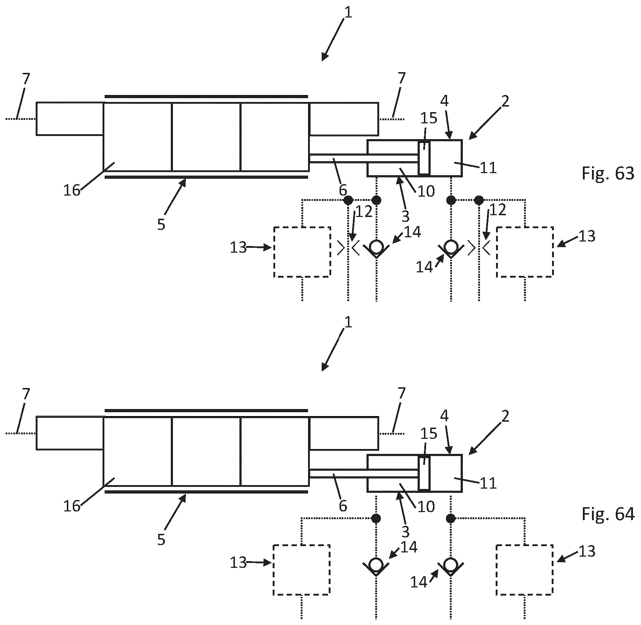

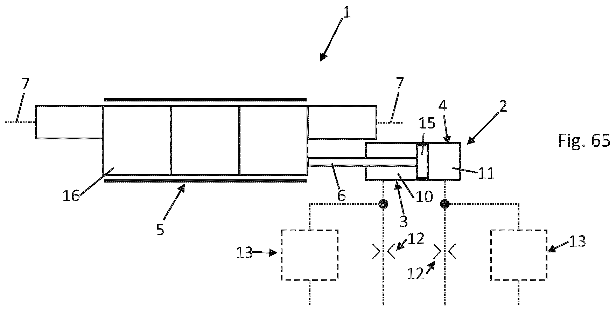

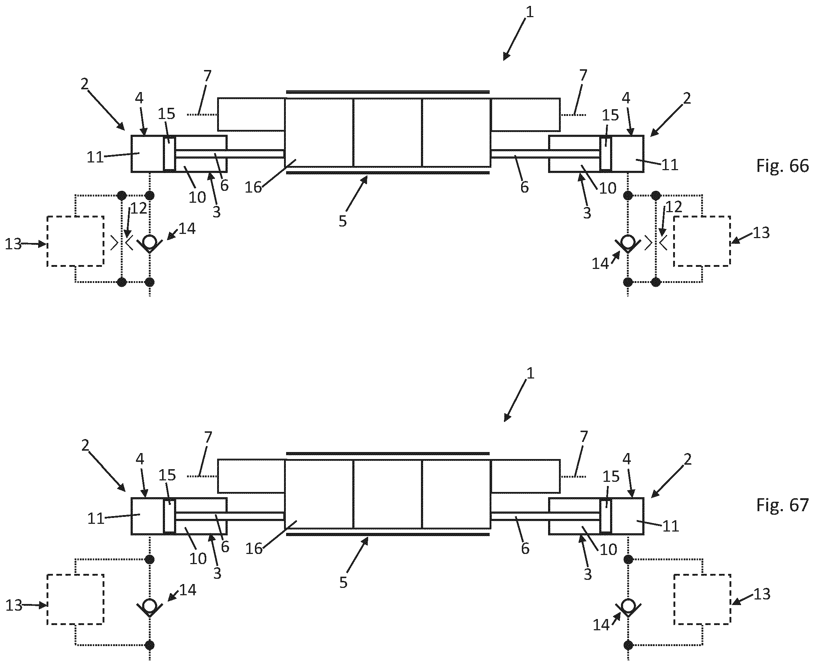

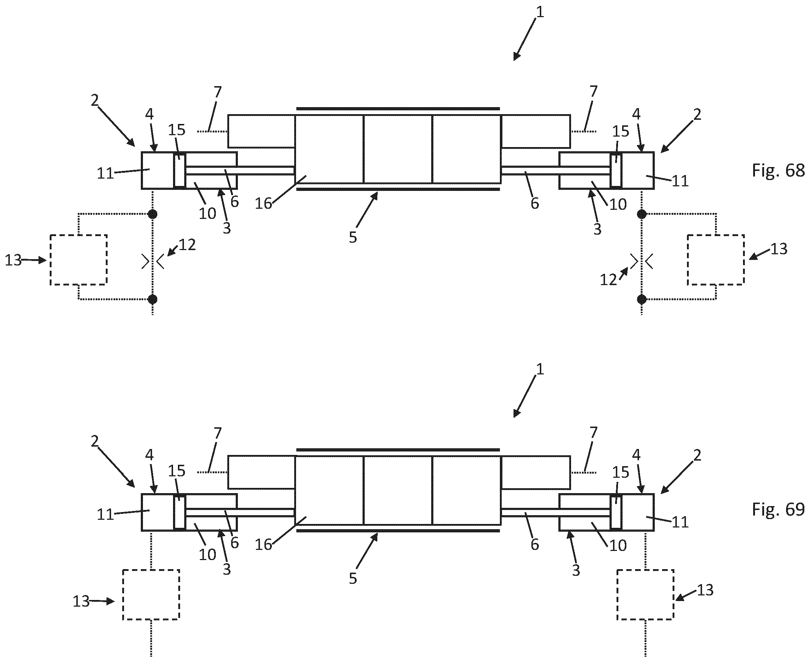

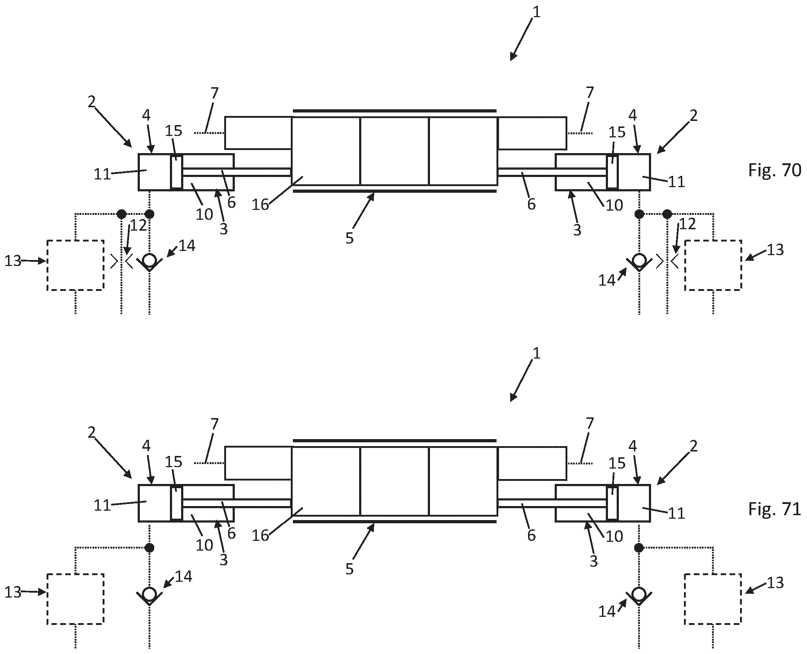

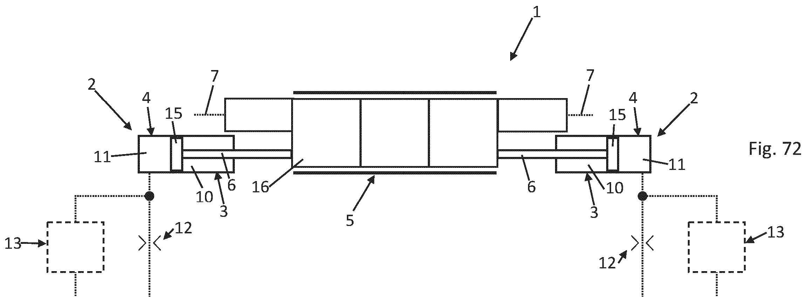

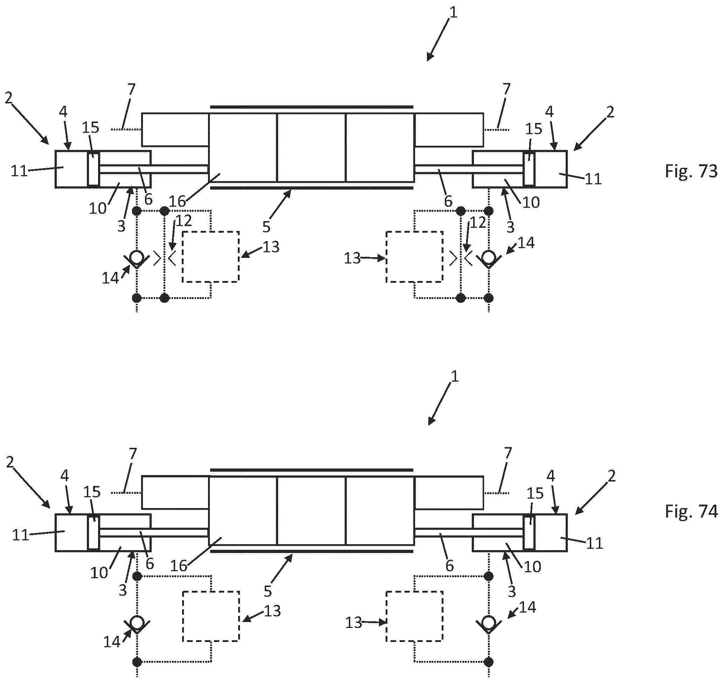

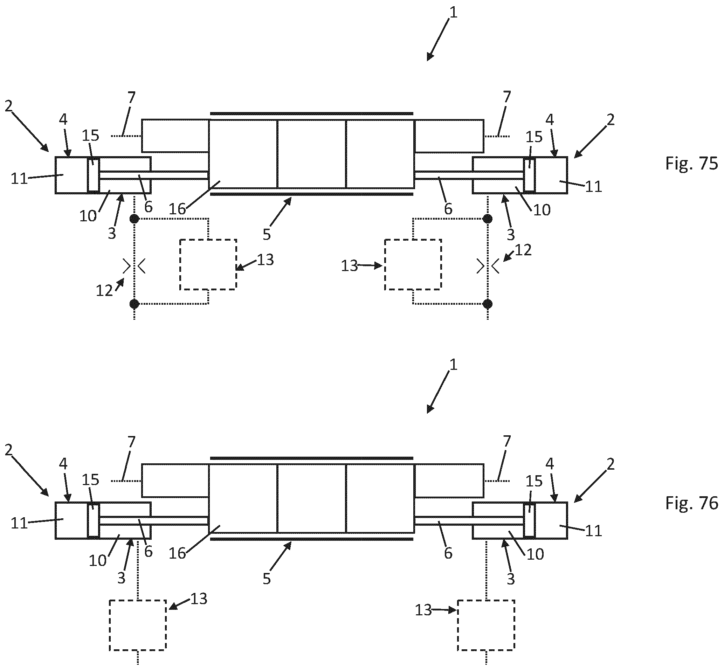

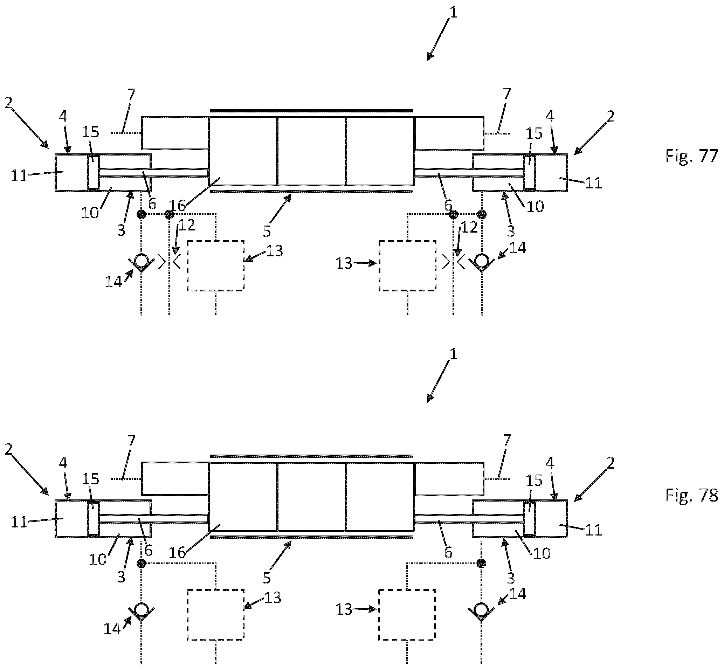

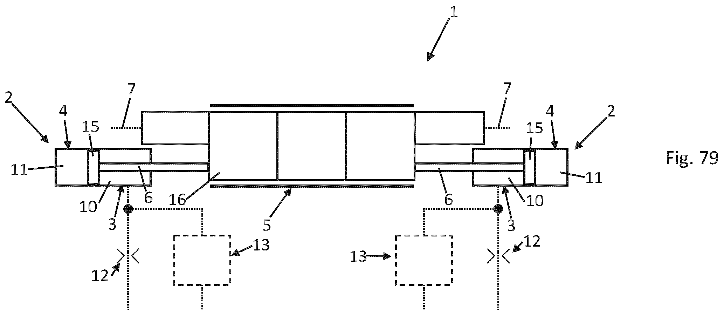

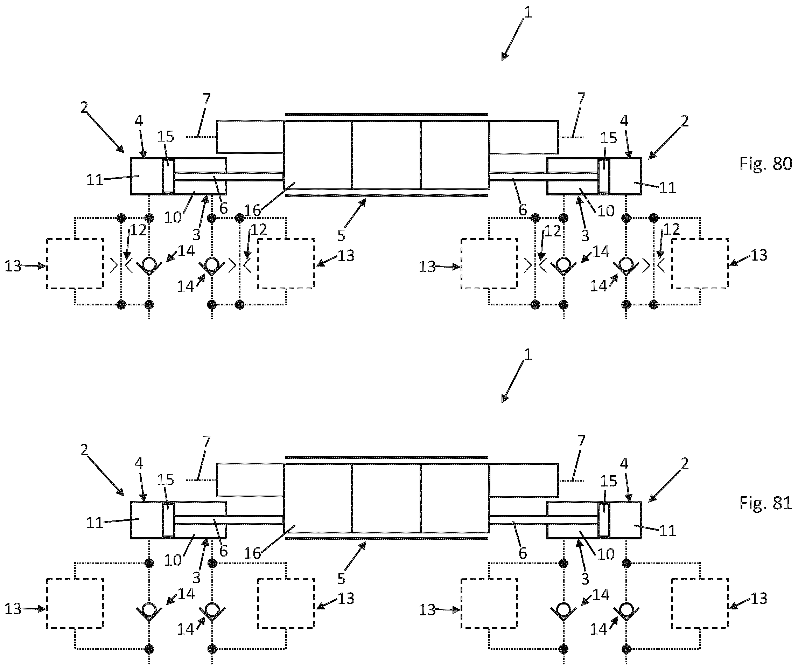

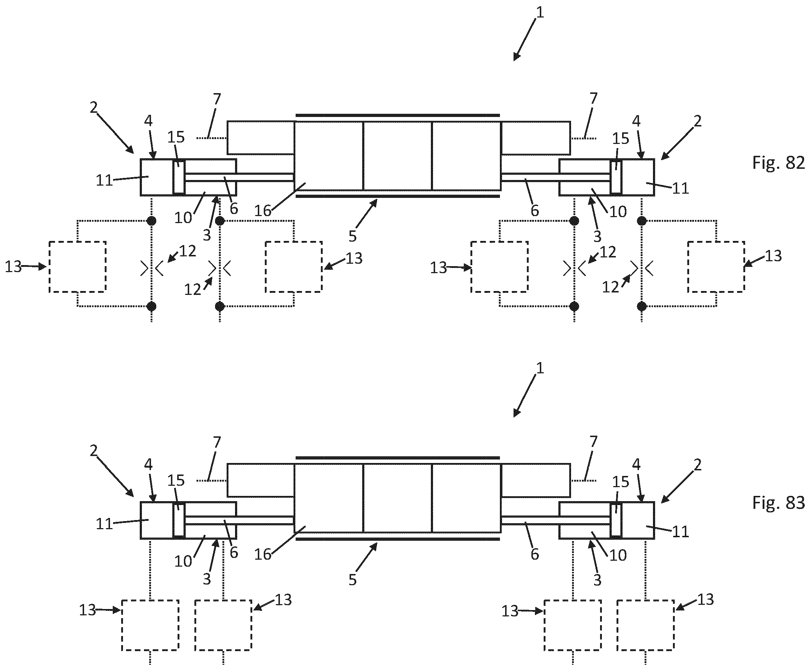

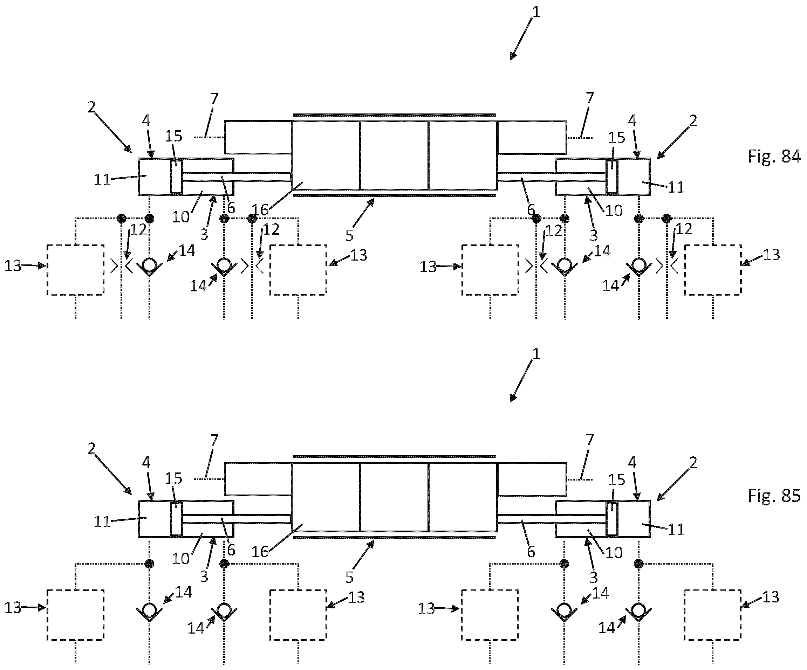

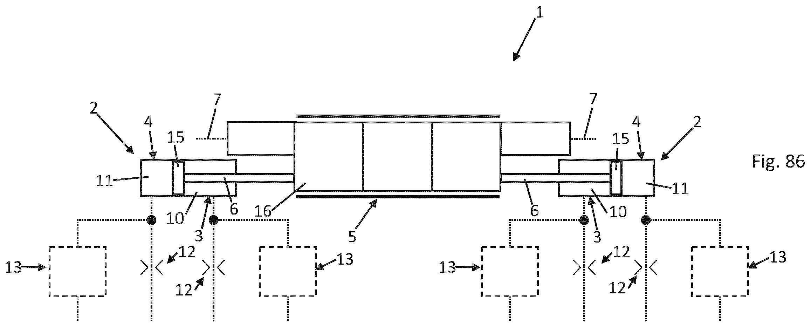

In den Figuren 1 bis 11 und 45 bis 90 haben die Dämpfungskammern 2 jeweils zum einen ein stangenseitiges Volumen 10 und zum anderen ein gegenüberliegendes Volumen 11. Bei den Dämpfungskammern der Figuren 12 bis 44 ist jeweils nur das Volumen 11 vorhanden.

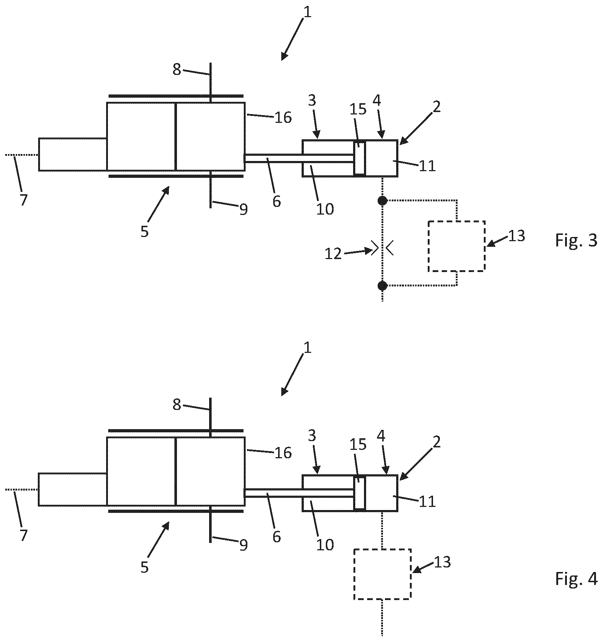

Weiterhin ist eine Dämpfungsmanipulationsvorrichtung 13 vorgesehen, die das Volumen 11 der zumindest einen Seite 3 der Dämpfungskammer 2 mit einem anderen, in der Zeichnung nicht dargestellten Volumen verbindet, wobei während des Betriebs des hydraulischen Systems mittels der Dämpfungsmanipulationsvorrichtung 13 das resultierende Verhalten der Dämpfungskammer 2 in Bezug auf die Reaktionszeit des Hydraulikventils 5 sowie die Dämpfungseigenschaften des Hydraulikventils 5 gezielt veränderbar ist. Ein besonders einfach gehaltenes Ausführungsbeispiel ist beispielsweise in Fig. 4 gezeigt.

Bei dem in den Fig. 1 bis 30 und 87 bis 93 gezeigten Hydraulikventil 5 handelt es sich um ein 3/2-Wegeventil, welches bei den in diesen Figuren gezeigten Ausführungsbeispielen einerseits einen als Steueranschluss ausgebildeten ersten Anschluss 7 sowie andererseits einen als Anschluss für die Hochdruckseite ausgebildeten zweiten Anschluss 8 und einen als Anschluss für die Niederdruckseite ausgebildeten dritten Anschluss 9 aufweist.

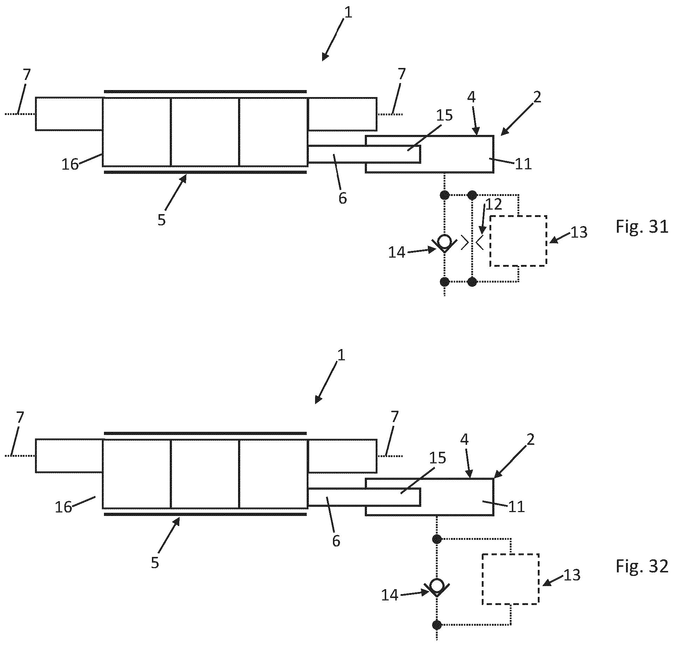

Hingegen sind in den Fig. 31 bis 86 und 94 jeweils 4/3-Wegeventile gezeigt, bei denen die entsprechenden Anschlüsse in den Zeichnungsdarstellungen nicht gezeigt sind.

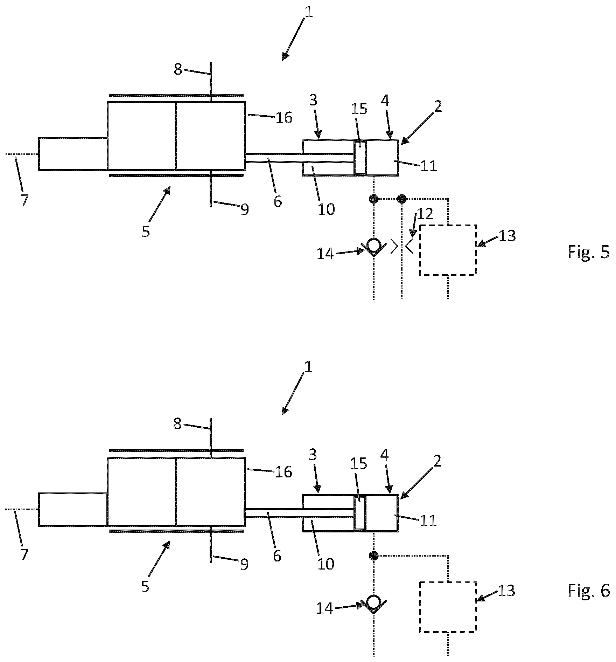

Parallel zu der Dämpfungsmanipulationsvorrichtung 13 kann beispielsweise ein hydraulischer Widerstand 12 (siehe Fig. 3), ein Rückschlagventil 14 (siehe Fig. 2) oder eine Parallelschaltung von einem hydraulischen Widerstand 12 und einem Rückschlagventil 14 (siehe Fig. 1) vorgesehen sein, wobei diese jeweils mit demselben Volumen verbunden sind wie die Dämpfungsmanipulationsvorrichtung 13. Die Fig. 5 bis 7 zeigen alternative Varianten, bei denen der hydraulische Widerstand 12 und/oder das Rückschlagventil 14 nicht mit demselben Volumen verbunden sind wie die Dämpfungsmanipulationsvorrichtung 13.

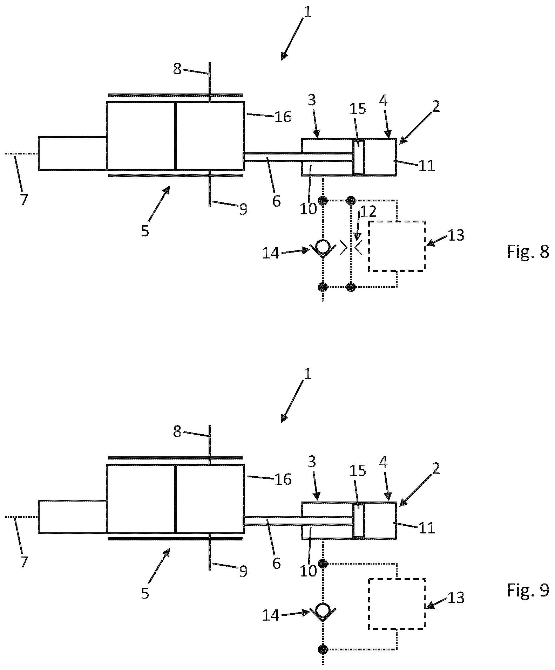

In den Fig. 8 bis 14 sind alternative Ausführungsbeispiele dargestellt, bei denen die Dämpfungsmanipulationsvorrichtung 13 nicht mit dem Volumen 11, sondern mit dem stangenseitigen Volumen 10 verbunden ist.

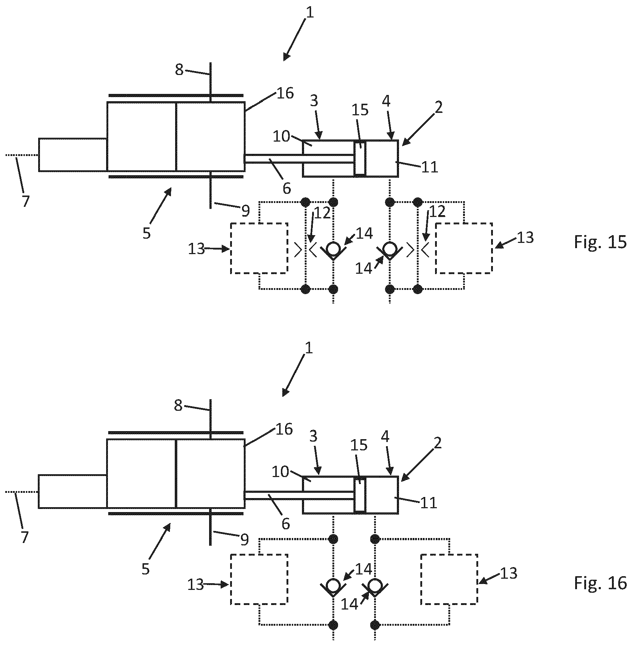

Die Fig. 15 bis 21 zeigen abweichende Varianten, bei denen sowohl das Volumen 11 als auch das stangenseitige Volumen 10 jeweils mit einer Dämpfungseinrichtung 13 verbunden sind. Bei gezeigten Varianten sind die jeweils beiden vorhandenen beiderseitigen Dämpfungseinrichtungen 13 jeweils identisch ausgebildet. Es können jedoch auch unterschiedliche Dämpfungseinrichtungen 13 vorhanden sein.

In den Fig. 22 bis 44 sind Ausführungsbeispiele gezeigt, bei denen die mechanische Verbindung 6 zwischen dem Hydraulikventil 5 und der Dämpfungskammer 2 nicht als separates Bauteil ausgebildet ist, sondern durch einen Teilbereich des Kolbens 15 der Dämpfungskammer 2 gebildet ist. Dabei weist die Dämpfungskammer 2 dann lediglich ein Volumen 11 auf, in welches die mechanische Verbindung 6 je nach Stellung des Hydraulikventils 5 mehr oder weniger stark eingedrungen ist und damit das Volumen 11 mehr oder weniger stark reduziert.

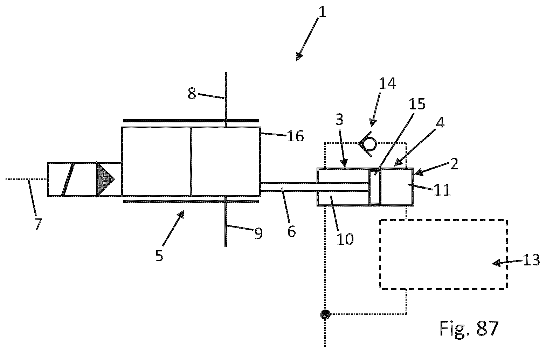

Bei dem in Fig. 87 gezeigten Ausführungsbeispiel ist parallel zu der Dämpfungskammer 2 ein Rückschlagventil 14 vorgesehen, welches das stangenseitige Volumen 10 und das gegenüberliegende Volumen 11 der Dämpfungskammer 2 miteinander verbindet und dessen Durchlassrichtung von dem stangenseitigen Volumen 10 zu dem gegenüberliegenden Volumen 11 führt.

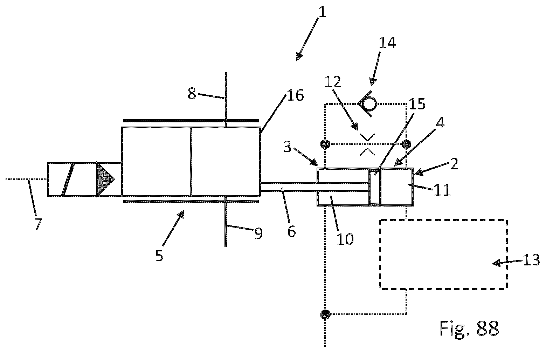

Bei den in den Fig. 88 bis 90 gezeigten Ausführungsbeispielen umfasst das Dämpfungssystem 1 weiterhin einen hydraulischen Widerstand 12, der die Volumen 10 und 11 der Dämpfungskammer 2 miteinander verbindet.

Wie beispielsweise in den Fig. 88 bis 94 jeweils gezeigt, kann der hydraulische Widerstand 12 in Form einer Blende ausgebildet sein.

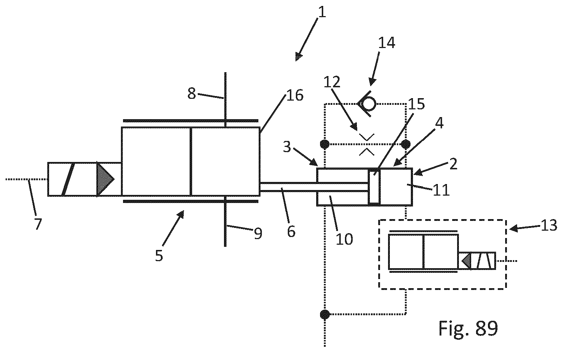

Bei den in den Fig. 89, 91 und 94 gezeigten Ausführungsbeispielen umfasst die Dämpfungsmanipulationsvorrichtung 13 ein vorgesteuertes Wegeventil. Sie kann auch ausschließlich hierdurch gebildet sein. Insoweit umfasst die Dämpfungsmanipulationsvorrichtung 13 einen aktiv steuerbaren zusätzlichen hydraulischen Widerstand, der mittels einer hydraulischen Betätigungseinrichtung und/oder einer elektrischen Betätigungseinrichtung betätigbar ist.

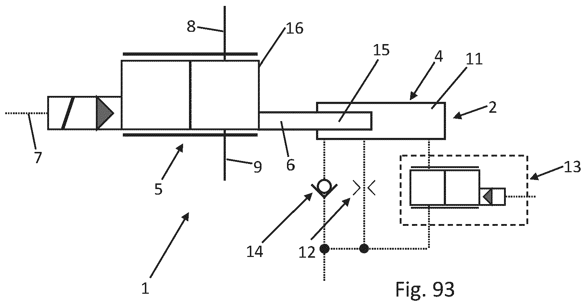

Bei dem in Fig. 93 dargestellten Ausführungsbeispiel umfasst die Dämpfungsmanipulationsvorrichtung 13 hingegen ein direkt gesteuertes Wegeventil. Sie kann auch ausschließlich hierdurch gebildet sein.

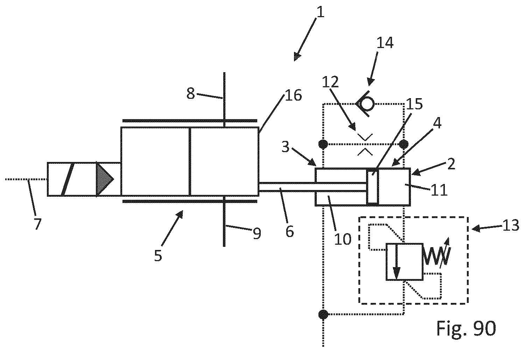

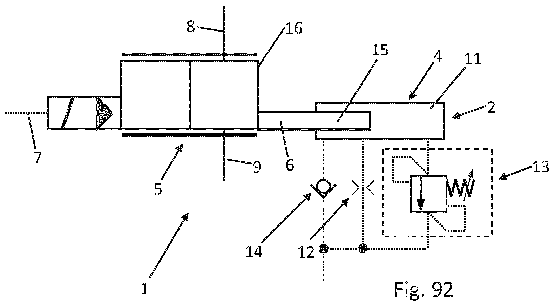

Bei den in den Fig. 90 und 92 gezeigten Ausführungsbeispielen der Erfindung umfasst jeweils die Dämpfungsmanipulationsvorrichtung 13 ein hydraulisches Druckbegrenzungsventil. Sie kann auch ausschließlich hierdurch gebildet sein.

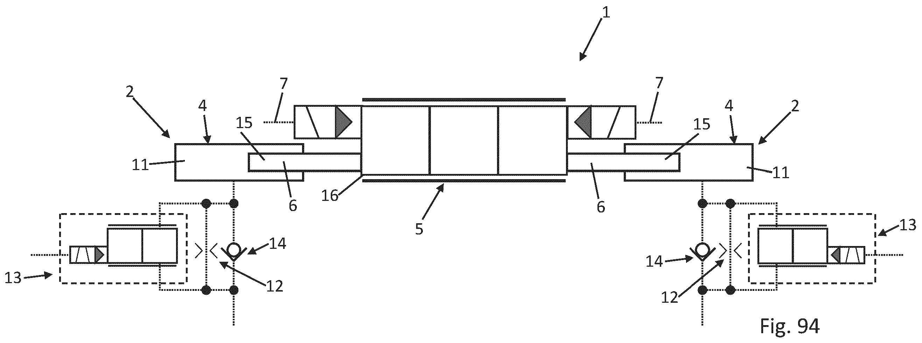

In Fig. 94 ist ein weiteres Ausführungsbeispiel gezeigt, bei dem das zu bedämpfende Hydraulikventil 5 mit zwei erfindungsgemäßen Dämpfungssystemen 1 versehen ist. Dabei sind die beiden Dämpfungssysteme 1 in entgegengesetzter Richtung dämpfend wirkend ausgebildet und beidseits des Hydraulikventils 5 vorgesehen.

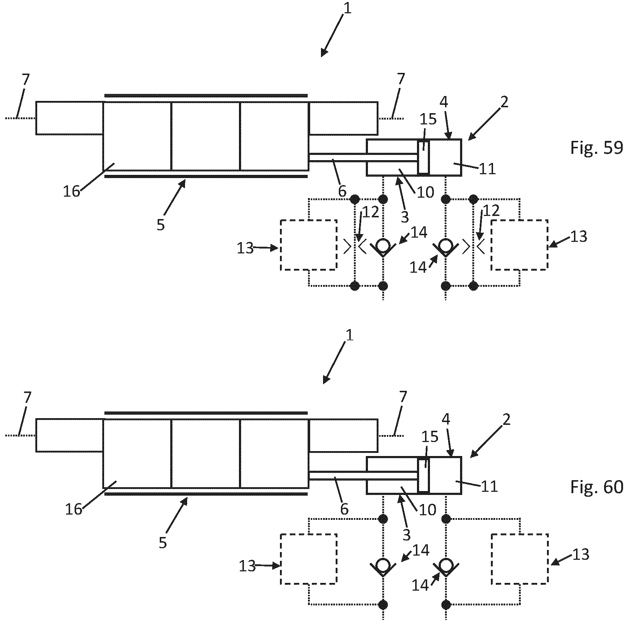

In den Fig. 59 bis 65 sind jeweils weitere Ausführungsbeispiele gezeigt, bei denen das zu bedämpfende Hydraulikventil 5 jeweils nur mit einem einzigen Dämpfungssystem 1 versehen ist. Dabei ist dieses Dämpfungssystem 1 jeweils als ein in beide Richtungen dämpfendes Dämpfungssystem 1 ausgebildet, welches jeweils zwei Dämpfungsmanipulationsvorrichtungen 13 umfasst, die jeweils mit je einem der beiden Volumen 10 und 11 der Dämpfungskammer 2 verbunden sind und dieses in jeweils einer Richtung bedämpfen.

## Patentansprüche

1. Dämpfungssystem (1) für hydraulische Systeme mit einem zu bedämpfenden Hydraulikventil (5), welches zumindest einen als Steueranschluss ausgebildeten ersten Anschluss (7), einen als Anschluss für die Hochdruckseite ausgebildeten zweiten Anschluss (8) und einen als Anschluss für die Niederdruckseite ausgebildeten dritten Anschluss (9) sowie einen Ventilschieber (16) aufweist, und mit einer Dämpfungskammer (2) mit zumindest einer Seite (4) und einem verlagerbaren Kolben (15), wobei die zumindest eine Seite (4) ein Volumen (11) aufweist, auf das der Kolben (15) wirkt, und wobei der Ventilschieber (16) des Hydraulikventils (5) insbesondere über eine mechanische Verbindung (6) derart mit dem Kolben (15) der Dämpfungskammer (2) verbunden ist, dass durch eine Verlagerung des Ventilschiebers (16) auch eine Verlagerung des Kolbens (15) resultiert, oder aber der Ventilschieber (16) des Hydraulikventils (5) den Kolben (15) der Dämpfungskammer (2) bildet, wobei eine Dämpfungsmanipulationsvorrichtung (13) vorgesehen ist, die das Volumen (11) der zumindest einen Seite (4) der Dämpfungskammer (2) mit einem anderen Volumen verbindet, wobei während des Betriebs des hydraulischen Systems mittels der Dämpfungsmanipulationsvorrichtung (13) das resultierende Verhalten der Dämpfungskammer (2) in Bezug auf die Reaktionszeit des Hydraulikventils (5) sowie die Dämpfungseigenschaften des Hydraulikventils (5) gezielt veränderbar ist, und wobei die Dämpfungsmanipulationsvorrichtung (13) ein hydraulisches Ventil umfasst, das druckgesteuert oder druckdifferenzgesteuert ist, wobei das hydraulische Ventil der Dämpfungsmanipulationsvorrichtung (13) als hydraulisches Druckbegrenzungsventil ausgebildet ist.

2. Dämpfungssystem (1) nach dem vorhergehenden Anspruch, **dadurch gekennzeichnet, dass** die Dämpfungskammer (2) eine zweite Seite (3) aufweist und vorzugsweise die zweite Seite (3) der Dämpfungskammer (2) ein Volumen (10) aufweist.

3. Dämpfungssystem (1) nach einem der vorhergehenden Ansprüche, **dadurch gekennzeichnet, dass** ein hydraulischer Widerstand (12) vorgesehen ist, der das Volumen (10 oder 11) von einer Seite (3 oder 4) der Dämpfungskammer (2) mit einem anderen Volumen verbindet.

4. Dämpfungssystem (1) nach dem vorhergehenden Anspruch **dadurch gekennzeichnet, dass** die Dämpfungsmanipulationsvorrichtung (13) parallel zu dem hydraulischen Widerstand (12) vorgesehen ist.

5. Dämpfungssystem (1) nach dem vorhergehenden Anspruch, **dadurch gekennzeichnet, dass** sowohl der hydraulische Widerstand (12) als auch die Dämpfungsmanipulationsvorrichtung (13) jeweils das Volumen (10 oder 11) der einen Seite (3 oder 4) der Dämpfungskammer (2) mit einem übereinstimmenden anderen Volumen verbinden.

6. Dämpfungssystem (1) nach Anspruch 3 oder 4, **dadurch gekennzeichnet, dass** das Volumen, mit dem der hydraulische Widerstand (12) die eine Seite (3 oder 4) der Dämpfungskammer (2) verbindet, unterschiedlich groß ist gegenüber dem Volumen, mit dem die Dämpfungsmanipulationsvorrichtung (13) das Volumen (11 oder 10) der anderen Seite (4 oder 3) der Dämpfungskammer (2) verbindet.

7. Dämpfungssystem (1) nach Anspruch 3, 4 oder 6, **dadurch gekennzeichnet, dass** das Volumen, mit dem der hydraulische Widerstand (12) die eine Seite (3 oder 4) der Dämpfungskammer (2) verbindet, sowie das Volumen, mit dem die Dämpfungsmanipulationsvorrichtung (13) das Volumen (11 oder 10) der anderen Seite (4 oder 3) der Dämpfungskammer (2) verbindet, durch den hydraulischen Widerstand (12) und die Dämpfungseinrichtung miteinander verbunden sind.

8. Dämpfungssystem (1) nach einem der vorhergehenden Ansprüche, **dadurch gekennzeichnet, dass** das Hydraulikventil (5) ein Proportionalventil ist.

9. Dämpfungssystem (1) nach einem der vorhergehenden Ansprüche, **dadurch gekennzeichnet, dass** die Dämpfungsmanipulationsvorrichtung (13) einen aktiv steuerbaren zusätzlichen hydraulischen Widerstand, vorzugsweise in Form eines aktiv steuerbaren zusätzlichen Hydraulikventils, umfasst.

10. Dämpfungssystem (1) nach dem vorhergehenden Anspruch, **dadurch gekennzeichnet, dass** für den zusätzlichen hydraulischen Widerstand eine hydraulische Betätigungseinrichtung und/oder eine elektrische Betätigungseinrichtung vorgesehen ist.

11. Dämpfungssystem (1) nach dem vorhergehenden Anspruch, **dadurch gekennzeichnet, dass** die Betätigungseinrichtung des aktiv steuerbaren zusätzlichen hydraulischen Widerstands derart mit einem Anschluss des Hydraulikventils (5), vorzugsweise mit dem ersten Anschluss oder dem zweiten Anschluss oder dem dritten Anschluss des Hydraulikventils (5), gekoppelt ist, dass sie über den Druck am ersten Anschluss oder den Druck am zweiten Anschluss oder den Druck am dritten Anschluss des Hydraulikventils (5) betätigt ist.

12. Dämpfungssystem (1) nach einem der vorhergehenden Ansprüche, **dadurch gekennzeichnet, dass** parallel zu dem hydraulischen Widerstand (12) ein Rückschlagventil (14) vorgesehen ist, dessen Durchlassrichtung vorzugsweise zu dem Volumen (11) der zumindest einen Seite (4) der Dämpfungskammer (2) führt.

13. Dämpfungssystem (1) nach Anspruch 3 oder einem der Ansprüche 4 bis 12, soweit auf Anspruch 3 rückbezogen, **dadurch gekennzeichnet, dass** der hydraulische Widerstand (12) mit dem als Steueranschluss ausgebildeten ersten Anschluss (7) oder dem als Anschluss für die Hochdruckseite ausgebildeten zweiten Anschluss (8) oder dem als Anschluss für die Niederdruckseite ausgebildeten dritten Anschluss (9) des Hydraulikventils (5) verbunden ist.

14. Dämpfungssystem (1) nach einem der vorhergehenden Ansprüche, **dadurch gekennzeichnet, dass** die Dämpfungsmanipulationsvorrichtung (13) mit dem als Anschluss für die Hochdruckseite ausgebildeten zweiten Anschluss (8) oder dem als Anschluss für die Niederdruckseite ausgebildeten dritten Anschluss (9) des Hydraulikventils (5) verbunden ist.

15. Hydraulisches System mit zumindest einem zu bedämpfenden Hydraulikventil (5), wobei jedes zu bedämpfende Hydraulikventil (5) zumindest einen als Steueranschluss ausgebildeten ersten Anschluss (7), einen als Anschluss für die Hochdruckseite ausgebildeten zweiten Anschluss (8) und einen als Anschluss für die Niederdruckseite ausgebildeten dritten Anschluss (9) sowie einen Ventilschieber (16) aufweist, **dadurch gekennzeichnet, dass** zumindest ein Dämpfungssystem (1) nach einem der vorhergehenden Ansprüche vorgesehen ist, welches einem zu bedämpfenden Hydraulikventil (5), in dieses Hydraulikventil (5) bedämpfender Weise, zugeordnet ist.

16. Hydraulisches System nach dem vorhergehenden Anspruch, **dadurch gekennzeichnet, dass** bei wenigstens einem zu bedämpfenden Hydraulikventil (5) zumindest zwei, vorzugsweise jeweils nur in eine Richtung dämpfende, Dämpfungssysteme (1) nach einem der Ansprüche 1 bis 14 derart vorgesehen sind, dass die beiden Dämpfungssysteme (1) zumindest in entgegengesetzter Richtung dämpfend wirkend angeordnet sind.

17. Hydraulisches System nach dem vorhergehenden Anspruch, **dadurch gekennzeichnet, dass** zum einen zumindest eines der zumindest zwei Dämpfungssysteme (1), die wenigstens in entgegengesetzter Richtung dämpfend wirkend sind, auf der einen Seite des zu bedämpfenden Hydraulikventils (5) vorgesehen ist und zum anderen zumindest ein anderes der zumindest zwei Dämpfungssysteme (1), die wenigstens in entgegengesetzter Richtung dämpfend wirkend sind, auf der anderen Seite des zu bedämpfenden Hydraulikventils (5) vorgesehen ist.

18. Hydraulisches System nach dem vorhergehenden Anspruch, **dadurch gekennzeichnet, dass** das auf der einen Seite des zu bedämpfenden Hydraulikventils (5) vorgesehene Dämpfungssystem (1) einerseits und das auf der anderen Seite des zu bedämpfenden Hydraulikventils (5) vorgesehene Dämpfungssystem (1) andererseits unterschiedlich ausgebildet sind und/oder unterschiedliche Dämpfungseigenschaften haben.

19. Hydraulisches System nach einem der Ansprüche 15 bis 18, **dadurch gekennzeichnet, dass** bei wenigstens einem zu bedämpfenden Hydraulikventil (5) nur ein einziges Dämpfungssystem (1) vorgesehen und als ein in beide Richtungen dämpfendes Dämpfungssystem (1) ausgebildet ist.

## Claims

1. Damping system (1) for hydraulic systems with a hydraulic valve (5) to be damped, which has at least one first connection (7) configured as a control connection, a second connection (8) configured as a connection for the high-pressure side and a third connection (9) configured as a connection for the low-pressure side as well as a valve spool (16), and with a damping chamber (2) having at least one side (4) and a displaceable piston (15), wherein the at least one side (4) has a volume (11) on which the piston (15) acts, and wherein the valve spool (16) of the hydraulic valve (5) is connected in particular via a mechanical connection (6) to the piston (15) of the damping chamber (2) in such a way that a displacement of the valve spool (16) also results in a displacement of the piston (15), or else the valve spool (16) of the hydraulic valve (5) forms the piston (15) of the damping chamber (2), wherein a damping manipulation device (13) is provided which connects the volume (11) of the at least one side (4) of the damping chamber (2) with another volume, wherein during operation of the hydraulic system by means of the damping manipulation device (13) the resulting behaviour of the damping chamber (2) with respect to the reaction time of the hydraulic valve (5) and the damping properties of the hydraulic valve (5) can be changed in a targeted manner, and wherein the damping manipulation device (13) comprises a hydraulic valve which is pressure-controlled or pressure-difference-controlled, the hydraulic valve of the damping manipulation device (13) being configured as a hydraulic pressure-limiting valve.

2. Damping system (1) according to the preceding claim, **characterised in that** the damping chamber (2) has a second side (3) and preferably the second side (3) of the damping chamber (2) has a volume (10).

3. Damping system (1) according to one of the preceding claims, **characterised in that** a hydraulic resistor (12) is provided, which connects the volume (10 or 11) of one side (3 or 4) of the damping chamber (2) to another volume.

4. Damping system (1) according to the preceding claim, **characterised in that** the damping manipulation device (13) is provided in parallel with the hydraulic resistor (12).

5. Damping system (1) according to the preceding claim, **characterised in that** both the hydraulic resistor (12) and the damping manipulation device (13) each connect the volume (10 or 11) of one side (3 or 4) of the damping chamber (2) to a corresponding other volume.

6. Damping system (1) according to claim 3 or 4, **characterised in that** the volume to which the hydraulic resistor (12) connects one side (3 or 4) of the damping chamber (2) is different in size to the volume to which the damping manipulation device (13) connects the volume (11 or 10) of the other side (4 or 3) of the damping chamber (2).

7. Damping system (1) according to claim 3, 4 or 6, **characterised in that** the volume to which the hydraulic resistor (12) connects one side (3 or 4) of the damping chamber (2) and the volume to which the damping manipulation device (13) connects the volume (11 or 10) of the other side (4 or 3) of the damping chamber (2) are connected to one another by the hydraulic resistor (12) and the damping device.

8. Damping system (1) according to any of the preceding claims, **characterised in that** the hydraulic valve (5) is a proportional valve.

9. Damping system (1) according to any of the preceding claims, **characterised in that** the damping manipulation device (13) comprises an actively controllable additional hydraulic resistor, preferably in the form of an actively controllable additional hydraulic valve.

10. Damping system (1) according to the preceding claim, **characterised in that** a hydraulic actuating device and/or an electrical actuating device is provided for the additional hydraulic resistor.

11. Damping system (1) according to the preceding claim, **characterised in that** the actuating device of the actively controllable additional hydraulic resistor is coupled to a connection of the hydraulic valve (5), preferably to the first connection or the second connection or the third connection of the hydraulic valve (5), in such a way that it is actuated via the pressure at the first connection or the pressure at the second connection or the pressure at the third connection of the hydraulic valve (5).

12. Damping system (1) according to any of the preceding claims, **characterised in that** a non-return valve (14) is provided in parallel with the hydraulic resistor (12), the passage direction of which preferably leads to the volume (11) of the at least one side (4) of the damping chamber (2).

13. Damping system (1) according to claim 3 or any of claims 4 to 12 if dependent on claim 3, **characterised in that** the hydraulic resistor (12) is connected to the first connection (7) configured as a control connection or the second connection (8) configured as a connection for the high-pressure side or the third connection (9) configured as a connection for the low-pressure side of the hydraulic valve (5).

14. Damping system (1) according to any of the preceding claims, **characterised in that** the damping manipulation device (13) is connected to the second connection (8) configured as a connection for the high-pressure side or to the third connection (9) configured as a connection for the low-pressure side of the hydraulic valve (5).

15. Hydraulic system with at least one hydraulic valve (5) to be damped, wherein each hydraulic valve (5) to be damped has at least one first connection (7) configured as a control connection, a second connection (8) configured as a connection for the high-pressure side and a third connection (9) configured as a connection for the low-pressure side as well as a valve spool (16), **characterised in that** at least one damping system (1) according to any of the preceding claims is provided, which is assigned to a hydraulic valve (5) to be damped in a manner such that it damps said hydraulic valve (5).

16. Hydraulic system according to the preceding claim, **characterised in that,** for at least one hydraulic valve (5) to be damped, at least two damping systems (1) according to one of claims 1 to 14, preferably each damping in only one direction, are provided in such a way that the two damping systems (1) are arranged so as to have a damping effect at least in the opposite direction.

17. Hydraulic system according to the preceding claim, **characterised in that,** on the one hand, at least one of the at least two damping systems (1), which have a damping effect at least in the opposite direction, is provided on one side of the hydraulic valve (5) to be damped and, on the other hand, at least one other of the at least two damping systems (1), which have a damping effect at least in the opposite direction, is provided on the other side of the hydraulic valve (5) to be damped.

18. Hydraulic system according to the preceding claim, **characterised in that** the damping system (1) provided on one side of the hydraulic valve (5) to be damped, on the one hand, and the damping system (1) provided on the other side of the hydraulic valve (5) to be damped, on the other hand, are differently configured and/or have different damping properties.

19. Hydraulic system according to any of claims 15 to 18, **characterised in that,** for at least one hydraulic valve (5) to be damped, only a single damping system (1) is provided and is configured as a damping system (1) damping in both directions.

## Revendications

1. Système d'amortissement (1) pour des systèmes hydrauliques, comprenant une vanne hydraulique (5) à amortir, laquelle présente au moins un premier raccordement (7) réalisé sous la forme d'un raccordement de commande, un deuxième raccordement (8) réalisé sous la forme d'un raccordement pour le côté haute pression et un troisième raccordement (9) réalisé sous la forme d'un raccordement pour le côté basse pression, ainsi qu'un tiroir de vanne (16), et comprenant une chambre d'amortissement (2) avec au moins un côté (4) et un piston (15) déplaçable, le au moins un côté (4) présentant un volume (11) sur lequel agit le piston (15), et le tiroir de vanne (16) de la vanne hydraulique (5) étant relié au piston (15) de la chambre d'amortissement (2), en particulier par l'intermédiaire d'une liaison mécanique (6), de telle manière qu'un déplacement du tiroir de vanne (16) entraîne également un déplacement du piston (15), ou que le tiroir de vanne (16) de la vanne hydraulique (5) forme le piston (15) de la chambre d'amortissement (2), un dispositif de manipulation d'amortissement (13) étant fourni, qui relie le volume (11) du au moins un côté (4) de la chambre d'amortissement (2) à un autre volume, le comportement de la chambre d'amortissement (2) qui en résulte par rapport au temps de réaction de la vanne hydraulique (5), ainsi que les propriétés d'amortissement de la vanne hydraulique (5), pouvant être modifiés de manière ciblée pendant le fonctionnement du système hydraulique au moyen du dispositif de manipulation d'amortissement (13), et le dispositif de manipulation d'amortissement (13) comprenant une vanne hydraulique qui est commandée par pression ou commandée par différence de pression, la vanne hydraulique du dispositif de manipulation d'amortissement (13) étant réalisée sous la forme d'une vanne de limitation de pression hydraulique.

2. Système d'amortissement (1) selon la revendication précédente, **caractérisé en ce que** la chambre d'amortissement (2) présente un deuxième côté (3), et le deuxième côté (3) de la chambre d'amortissement (2) présente de manière préférée un volume (10).

3. Système d'amortissement (1) selon l'une quelconque des revendications précédentes, **caractérisé en ce qu'**une résistance hydraulique (12) est fournie, qui relie le volume (10 ou 11) d'un côté (3 ou 4) de la chambre d'amortissement (2) à un autre volume.

4. Système d'amortissement (1) selon la revendication précédente, **caractérisé en ce que** le dispositif de manipulation d'amortissement (13) est fourni parallèlement à la résistance hydraulique (12).

5. Système d'amortissement (1) selon la revendication précédente, **caractérisé en ce que** la résistance hydraulique (12) et le dispositif de manipulation d'amortissement (13) relient respectivement le volume (10 ou 11) d'un côté (3 ou 4) de la chambre d'amortissement (2) à un autre volume correspondant.

6. Système d'amortissement (1) selon la revendication 3 ou 4, **caractérisé en ce que** le volume avec lequel la résistance hydraulique (12) relie un côté (3 ou 4) de la chambre d'amortissement (2) est d'une taille différente du volume avec lequel le dispositif de manipulation d'amortissement (13) relie le volume (11 ou 10) de l'autre côté (4 ou 3) de la chambre d'amortissement (2).

7. Système d'amortissement (1) selon la revendication 3, 4 ou 6, **caractérisé en ce que** le volume avec lequel la résistance hydraulique (12) relie un côté (3 ou 4) de la chambre d'amortissement (2) ainsi que le volume avec lequel le dispositif de manipulation d'amortissement (13) relie le volume (11 ou 10) de l'autre côté (4 ou 3) de la chambre d'amortissement (2) sont reliés entre eux par la résistance hydraulique (12) et le dispositif d'amortissement.

8. Système d'amortissement (1) selon l'une quelconque des revendications précédentes, **caractérisé en ce que** la vanne hydraulique (5) est une vanne proportionnelle.

9. Système d'amortissement (1) selon l'une quelconque des revendications précédentes, **caractérisé en ce que** le dispositif de manipulation d'amortissement (13) comprend une résistance hydraulique supplémentaire pouvant être commandée de manière active, de manière préférée sous la forme d'une vanne hydraulique supplémentaire pouvant être commandée de manière active.

10. Système d'amortissement (1) selon la revendication précédente, **caractérisé en ce qu'**un dispositif d'actionnement hydraulique et/ou un dispositif d'actionnement électrique est/sont fourni(s) pour la résistance hydraulique supplémentaire.

11. Système d'amortissement (1) selon la revendication précédente, **caractérisé en ce que** le dispositif d'actionnement de la résistance hydraulique supplémentaire pouvant être commandée de manière active est couplé à un raccordement de la vanne hydraulique (5), de manière préférée au premier raccordement ou au deuxième raccordement ou au troisième raccordement de la vanne hydraulique (5) de telle manière qu'il est actionné par la pression au niveau du premier raccordement ou par la pression au niveau du deuxième raccordement ou par la pression au niveau du troisième raccordement de la vanne hydraulique (5).

12. Système d'amortissement (1) selon l'une quelconque des revendications précédentes, **caractérisé en ce qu'**un clapet anti-retour (14), dont le sens de passage mène de manière préférée au volume (11) du au moins un côté (4) de la chambre d'amortissement (2), est fourni parallèlement à la résistance hydraulique (12).

13. Système d'amortissement (1) selon la revendication 3 ou l'une quelconque des revendications 4 à 12, dans la mesure où elle dépend de la revendication 3, **caractérisé en ce que** la résistance hydraulique (12) est reliée au premier raccordement (7) réalisé sous la forme d'un raccordement de commande ou au deuxième raccordement (8) réalisé sous la forme d'un raccordement pour le côté haute pression ou au troisième raccordement (9), réalisé sous la forme d'un raccordement pour le côté basse pression, de la vanne hydraulique (5).

14. Système d'amortissement (1) selon l'une quelconque des revendications précédentes, **caractérisé en ce que** le dispositif de manipulation d'amortissement (13) est relié au deuxième raccord (8) réalisé sous la forme d'un raccord pour le côté haute pression ou au troisième raccord (9), réalisé sous la forme d'un raccord pour le côté basse pression, de la vanne hydraulique (5).

15. Système hydraulique comprenant au moins une vanne hydraulique (5) à amortir, chaque vanne hydraulique (5) à amortir présentant au moins un premier raccord (7) réalisé sous la forme d'un raccord de commande, un deuxième raccord (8) réalisé sous la forme d'un raccord pour le côté haute pression et un troisième raccord (9) réalisé sous la forme d'un raccord pour le côté basse pression, ainsi qu'un tiroir de vanne(16), **caractérisé en ce qu'**au moins un système d'amortissement (1) selon l'une quelconque des revendications précédentes est fourni, lequel est associé à une vanne hydraulique (5) à amortir, de manière à amortir ladite vanne hydraulique (5).

16. Système hydraulique selon la revendication précédente, **caractérisé en ce que,** dans le cas d'au moins une vanne hydraulique (5) à amortir, au moins deux systèmes d'amortissement (1), de manière préférée n'amortissant respectivement que dans un sens, sont fournis selon l'une quelconque des revendications 1 à 14 de telle manière que les deux systèmes d'amortissement (1) sont agencés de manière à agir en amortissement au moins dans le sens opposé.

17. Système hydraulique selon la revendication précédente, **caractérisé en ce qu'au** moins un des au moins deux systèmes d'amortissement (1) qui agissent en amortissement au moins dans la direction opposée, d'une part, est fourni d'un côté de la vanne hydraulique (5) à amortir, et au moins un autre des au moins deux systèmes d'amortissement (1) qui agissent en amortissement au moins dans la direction opposée, d'autre part, est fourni de l'autre côté de la vanne hydraulique (5) à amortir.

18. Système hydraulique selon la revendication précédente, **caractérisé en ce que** le système d'amortissement (1) fourni d'un côté de la vanne hydraulique (5) à amortir, d'une part, et le système d'amortissement (1) fourni de l'autre côté de la vanne hydraulique (5) à amortir, d'autre part, sont réalisés de manière différente et/ou ont des propriétés d'amortissement différentes.

19. Système hydraulique selon l'une quelconque des revendications 15 à 18, **caractérisé en ce que,** dans le cas d'au moins une vanne hydraulique (5) à amortir, un seul système d'amortissement (1) est fourni et est réalisé sous la forme d'un système d'amortissement (1) amortissant dans les deux sens.
